# EUROPEAN PATENT APPLICATION

(11) **EP 4 787 961 A1**
(43) Date of publication of application: **05.08.2026**
(21) Application number: 24884101.7
(22) Date of filing: 07.08.2024
(51) Int. Cl.: H04W 36/00

(54) **COMMUNICATION METHOD, TERMINAL DEVICE AND CHIP SYSTEM**

(30) Priority: 31.10.2023 CN 202311445314; 10.11.2023 CN 202311503061
(71) Applicant: Honor Device Co., Ltd., Shenzhen, Guangdong 518040 (CN)
(72) Inventor: LI, Haibo, Shenzhen, Guangdong 518040 (CN)
(74) Representative: Henselmann, Alexander Gerhard
(86) International application number: PCT/CN2024/110468
(87) International publication number: WO 2025/092094

(57) **Abstract**

Embodiments of this application provide a communication method, a terminal device, and a chip system, and relate to the field of terminal device communication. The method can improve a call success rate of a terminal device. The method includes: User equipment UE camps on an NR network. The UE receives an operation that is performed by a user on an interface of the UE and that is used to disable a 5G communication capability of the UE. The UE camps on a first LTE cell, and sends a TAU request to the first LTE cell. The UE receives a second operation performed by the user on the interface of the UE, where the second operation is used to enable the 5G communication capability of the UE. When the UE meets a preset condition, the UE camps on a first NR cell, and sends a first registration request to the first NR cell, where the first registration request carries indication information indicating that a registration type is initial registration.

## Description

This application claims priority to Chinese Patent Application No. 202311445314.8, filed with the China National Intellectual Property Administration on October 31, 2023 and entitled "COMMUNICATION METHOD, USER EQUIPMENT, AND CHIP SYSTEM", which is incorporated herein by reference in its entirety.

This application also claims priority to Chinese Patent Application No. 202311503061.5, filed with the China National Intellectual Property Administration on November 10, 2023 and entitled "COMMUNICATION METHOD, TERMINAL DEVICE, AND CHIP SYSTEM", which is incorporated herein by reference in its entirety.

### TECHNICAL FIELD

This application relates to the field of terminal device communication, and specifically, to a communication method, a terminal device, and a chip system.

### BACKGROUND

In a working process, a terminal device frequently changes networks of different standards to camp on.

For example, when a user frequently enables or disables a 5G network, the terminal device may frequently change the networks to camp on. For example, when the terminal device camps on the 5G network, the user disables the 5G network, and the terminal correspondingly changes to camp on another network, for example, changes to camp on a 4G network. Then, the user re-enables the 5G network, and correspondingly the terminal changes to the 5G network to recamp on.

In a scenario in which UE frequently changes the networks to camp on, there may be a problem that the terminal successfully recamps on the 5G network, but cannot receive incoming voice calls or SMS messages for a long time.

### SUMMARY

Some embodiments of this application provide a communication method, a terminal device (also referred to as user equipment in this specification), and a chip system, to improve a call success rate of the terminal device. To achieve the above technical objective, this application adopts the following technical solutions.

According to a first aspect, a communication method is provided. The method includes: User equipment UE camps on an NR network. The UE receives a first operation performed by a user on an interface of the UE, where the first operation is used to disable a 5G communication capability of the UE. After receiving the first operation, the UE camps on a first LTE cell, and initiates a tracking area update TAU procedure to the first LTE cell, where the TAU procedure includes that the UE sends a TAU request to the first LTE cell. After receiving the first operation, the UE receives a second operation performed by the user on the interface of the UE, where the second operation is used to enable the 5G communication capability of the UE. After the UE receives the second operation, when the UE meets a preset condition, the UE camps on the first NR cell, and sends a first registration request to the first NR cell, where the first registration request carries indication information indicating that a registration type is initial registration initial registration; and that the UE meets the preset condition includes: The TAU procedure is ongoing before the UE sends the first registration request to the first NR cell. In this example, that the UE camps on the NR network may include that the UE camps on a cell of the NR network, and the UE has completed registration with an NR network device. In different implementations, when the UE camps on the NR network, a camped NR cell may be the first NR cell, or an NR cell other than the first NR cell.

Based on this solution, when the UE receives the second operation of the user and needs to recamp on the NR network, the UE may initiate an initial registration procedure to the NR network upon meeting the preset condition. Therefore, this avoids a problem that the UE cannot normally receive a voice call or an SMS message over the NR network because a registration request does not carry the TAU request due to an incomplete TAU procedure in an LTE network. Based on the initial registration procedure, regardless of whether the TAU procedure in the LTE network is completed, the UE can register with the NR network, and implement information synchronization between the UE and the network side. In this case, when the registration succeeds, the UE may receive a voice call or an SMS message via the first NR cell.

Optionally, that the TAU procedure is ongoing before the UE sends the first registration request to the first NR cell includes: When the UE prepares to send the first registration request to the first NR cell, or when the UE receives the second operation, the TAU procedure is ongoing. This specifies specific implementation in which the TAU procedure is ongoing.

Optionally, that the TAU procedure is ongoing before the UE sends the first registration request to the first NR cell includes: When a modem modem of the UE receives a second instruction, the TAU procedure is ongoing, where the second instruction is a message sent by an application processor AP of the UE to the modem after the UE receives the second operation. This specifies that the ongoing TAU procedure corresponds to the modem receiving the message that is sent by the AP and that indicates the second operation input by the user.

Optionally, that the TAU procedure is ongoing includes: The UE receives neither a TAU reject reject message sent from the first LTE cell nor a TAU accept accept message sent from the first LTE cell. In this case, the ongoing TAU procedure corresponds to the UE not receiving a response corresponding to the TAU request.

Optionally, the 5G communication capability of the UE includes a capability of the UE to communicate with a 5G network of standalone SA networking. In some embodiments, the UE may further have a 4G communication capability. In some other embodiments, the UE may alternatively have an NSA communication capability.

Optionally, that the UE receives a second operation performed by the user on the interface of the UE includes: After sending the TAU request to the first LTE cell, the UE receives the second operation performed by the user on the interface of the UE.

Optionally, that the modem of the UE receives the second instruction includes: After the modem of the UE sends the TAU request to the first LTE cell, the modem receives the second instruction.

Optionally, that the UE camps on a first LTE cell includes: After the modem of the UE receives a first instruction, the UE camps on the first LTE cell, where the first instruction is a message sent by the AP of the UE to the modem after the UE receives the first operation.

During implementation of the solution provided in the first aspect, an example in which the UE frequently changes, based on enabling or disabling of a 5G network by the user, to camp between the 5G network and a 4G network is used to limit the solutions provided in this application. In a scenario corresponding to the solution provided in the following second aspect, the UE can avoid a problem of a call failure after recamping on the 5G network when the UE frequently changes, based on another reason, between the 5G network and the 4G network to camp on.

According to a second aspect, a communication method is provided. The method includes: User equipment UE camps on an NR network. When the UE reselects an LTE network, or the UE is redirected from the NR network to the LTE network, or the UE switches from the NR network to the LTE network, or the UE disables a 5G communication capability of the UE, the UE camps on a first LTE cell, and initiates a TAU procedure to the first LTE cell, where the TAU procedure includes that the UE sends a TAU request to the first LTE cell. When the UE reselects the NR network, or the UE is redirected from the LTE network to the NR network, or the UE switches from the LTE to the NR network, or the UE enables the 5G communication capability of the UE, and the UE meets a preset condition, the UE camps on a first NR cell, and sends a first registration request to the first NR cell, where the first registration request carries indication information indicating that a registration type is initial registration initial registration; and that the UE meets the preset condition includes: The TAU procedure is ongoing before the UE sends the first registration request to the first NR cell.

Optionally, that the TAU procedure is ongoing before the UE sends the first registration request to the first NR cell includes: When the UE prepares to send the first registration request to the first NR cell, or when the UE enables the 5G communication capability of the UE, the TAU procedure is ongoing.

Optionally, the case in which the UE enables the 5G communication capability of the UE includes: The UE receives a second operation performed by a user on an interface of the UE, where the second operation is used to enable the 5G communication capability of the UE. The case in which the UE disables the 5G communication capability of the UE includes: The UE receives a first operation performed by the user on the interface of the UE, where the first operation is used to disable the 5G communication capability of the UE. For example, the first operation may be an operation performed by the user on a 5G network enabling/disabling key on the interface of the UE.

Optionally, the case in which the UE enables the 5G communication capability of the UE further includes: A modem of the UE receives a second instruction, where the second instruction is a message sent by an AP of the UE to the modem after the UE receives the second operation. The case in which the UE disables the 5G communication capability of the UE further includes: The modem of the UE receives a first instruction, where the first instruction is a message sent by the AP of the UE to the modem after the UE receives the first operation.

Optionally, that the TAU procedure is ongoing includes: The UE receives neither a TAU reject reject message sent from the first LTE cell nor a TAU accept accept message sent from the first LTE cell.

Optionally, the 5G communication capability of the UE includes a capability of the UE to communicate with a 5G network of standalone SA networking.

According to a third aspect, a communication method is provided. The method includes: User equipment UE camps on an NR network. The UE receives a first operation performed by a user on an interface of the UE, where the first operation is used to disable a 5G communication capability of the UE. After receiving the first operation, the UE camps on a first LTE cell, and initiates a tracking area update TAU procedure to the first LTE cell, where the TAU procedure includes that the UE sends a TAU request to the first LTE cell. After receiving the first operation, the UE receives a second operation performed by the user on the interface of the UE, where the second operation is used to enable the 5G communication capability of the UE. After the UE receives the second operation, when the UE meets a preset condition, the UE camps on the first NR cell, and sends a second registration request to the first NR cell, where the second registration request carries the TAU request; and that the UE meets the preset condition includes: The TAU procedure is ongoing before the UE sends the second registration request to the first NR cell.

During implementation of the solution provided in the third aspect, when the TAU procedure is ongoing, the UE may directly include the TAU request in a registration request for a 5G network. Therefore, a recamped 5G network can synchronize with the UE based on the registration request, so that after the UE successfully camps on the 5G network, the UE can be smoothly called.

Optionally, that the second registration request carries the TAU request includes: The second registration request includes a field indicating that Eps_nas_msg is 72. It may be understood that, when the registration request carries the TAU request, the UE may include information about the TAU request in information corresponding to the Eps_nas_msg field configured to a value of 72.

Optionally, that the UE meets the preset condition further includes: Before the UE sends the second registration request to the first NR cell, the UE is in a 5GMM-IDLE state, or that the UE meets the preset condition further includes: Before the UE sends the second registration request to the first NR cell, the UE is in a 5GMM-IDLE state, and the UE has received, from the NR network, an indication indicating that the NR network supports an N26 interface.

Optionally, that the TAU procedure is ongoing before the UE sends the first registration request to the first NR cell includes: When the UE prepares to send the first registration request to the first NR cell, or when the UE receives the second operation, the TAU procedure is ongoing.

Optionally, that the TAU procedure is ongoing before the UE sends the first registration request to the first NR cell includes: When a modem modem of the UE receives a second instruction, the TAU procedure is ongoing, where the second instruction is a message sent by an application processor AP of the UE to the modem after the UE receives the second operation.

Optionally, that the TAU procedure is ongoing includes: The UE receives neither a TAU reject reject message sent from the first LTE cell nor a TAU accept accept message sent from the first LTE cell.

Optionally, the 5G communication capability of the UE includes a capability of the UE to communicate with a 5G network of standalone SA networking.

Optionally, that the UE receives a second operation performed by the user on the interface of the UE includes: After sending the TAU request to the first LTE cell, the UE receives the second operation performed by the user on the interface of the UE.

Optionally, that the modem of the UE receives the second instruction includes: After the modem of the UE sends the TAU request to the first LTE cell, the modem receives the second instruction.

Optionally, that the UE camps on a first LTE cell includes: After the modem of the UE receives a first instruction, the UE camps on the first LTE cell, where the first instruction is a message sent by the AP of the UE to the modem after the UE receives the first operation.

According to a fourth aspect, a communication method is provided. The method includes: UE camps on a first NR cell. When the UE reselects an LTE network, or the UE is redirected from an NR network corresponding to the first NR cell to the LTE network, or the UE switches from the NR network to the LTE network, or the UE disables a 5G communication capability of the UE, the UE camps on a first LTE cell, and initiates a TAU procedure to the first LTE cell, where the TAU procedure includes that the UE sends a TAU request to the first LTE cell. When the UE reselects the NR network, or the UE is redirected from the LTE network to the NR network, or the UE network enables the 5G communication capability of the UE, and the UE meets a preset condition, the UE camps on a first NR cell, and sends a second registration request to the first NR cell, where the second registration request carries the TAU request; and that the UE meets the preset condition includes: The TAU procedure is ongoing before the UE sends the second registration request to the first NR cell.

Optionally, that the TAU procedure is ongoing before the UE sends the first registration request to the first NR cell includes: When the UE prepares to send the first registration request to the first NR cell, or when the UE enables the 5G communication capability of the UE, the TAU procedure is ongoing.

Optionally, the case in which the UE enables the 5G communication capability of the UE includes: The UE receives a second operation performed by a user on an interface of the UE, where the second operation is used to enable the 5G communication capability of the UE. The case in which the UE disables the 5G communication capability of the UE includes: The UE receives a first operation performed by the user on the interface of the UE, where the first operation is used to disable the 5G communication capability of the UE.

Optionally, the case in which the UE enables the 5G communication capability of the UE further includes: A modem of the UE receives a second instruction, where the second instruction is a message sent by an AP of the UE to the modem after the UE receives the second operation. The case in which the UE disables the 5G communication capability of the UE further includes: The modem of the UE receives a first instruction, where the first instruction is a message sent by the AP of the UE to the modem after the UE receives the first operation.

Optionally, that the TAU procedure is ongoing includes: The UE receives neither a TAU reject reject message sent from the first LTE cell nor a TAU accept accept message sent from the first LTE cell.

Optionally, the 5G communication capability of the UE includes a capability of the UE to communicate with a 5G network of standalone SA networking.

According to the following technical solutions provided in a fifth aspect and a sixth aspect, a timer is appropriately configured, so that UE has more time to complete a TAU procedure before initiating registration with a 5G network. This further increases a probability that a registration request for the 5G network carries a TAU request. This can also increase a probability that the UE receives a call after recamping on the 5G network. According to the fifth aspect, implementation of the solution in which the timer is configured in an AP in a scenario in which the UE frequently recamps on a network due to a user operation is provided. According to the sixth aspect, implementation of the solution in which the timer is configured in the modem in a scenario in which the UE frequently recamps on a network due to a user operation is provided.

According to a fifth aspect, a communication method is provided. The method includes: User equipment UE camps on an NR network. The UE receives a first operation performed by a user on an interface of the UE, where the first operation is used to disable a 5G communication capability of the UE. After receiving the first operation, the UE camps on a first LTE cell, and initiates a tracking area update TAU procedure to the first LTE cell, where the TAU procedure includes that the UE sends a TAU request to the first LTE cell. After receiving the first operation, the UE receives a second operation performed by the user on the interface of the UE, where the second operation is used to enable the 5G communication capability of the UE. The second operation is received when first duration elapses after the UE receives the first operation, or the second operation is received after the TAU procedure succeeds. After the UE receives the second operation, the UE camps on a first NR cell, and sends a third registration request to the first NR cell, where the third registration request carries the TAU request.

Optionally, after the UE receives the first operation, the method further includes: An AP of the UE starts a first timer, where timing duration of the first timer is the first duration; and during timing of the first timer, the UE enables the 5G communication capability of the UE to be configured to be inoperable.

Optionally, the method further includes: exiting the first timer when timing of the first duration ends or a TAU Accept message corresponding to the TAU request is received; and after exiting the first timer, the UE enables the 5G communication capability of the UE to be configured to be operable.

Optionally, that the UE receives the second operation includes: After exiting the first timer, the UE receives the second operation.

According to a sixth aspect, a communication method is provided. The method includes: User equipment UE camps on an NR network. The UE receives a first operation performed by a user on an interface of the UE, where the first operation is used to disable a 5G communication capability of the UE. After receiving the first operation, the UE camps on a first LTE cell, and initiates a tracking area update TAU procedure to the first LTE cell, where the TAU procedure includes that the UE sends a TAU request to the first LTE cell. After receiving the first operation, the UE receives a second operation performed by the user on the interface of the UE, where the second operation is used to enable the 5G communication capability of the UE. The second operation is received in second duration after the UE receives the first operation, or the second operation is received before the TAU procedure succeeds. When the second duration elapses after the UE receives the first operation or after the TAU procedure succeeds, the UE camps on a first NR cell, and sends a fourth registration request to the first NR cell, where the fourth registration request carries the TAU request.

Optionally, after sending the TAU request, the method further includes: A modem of the UE starts a second timer, where timing duration of the second timer is the second duration; and during timing of the second timer, the modem of the UE caches information corresponding to the received second operation.

Optionally, the information corresponding to the second operation includes a second instruction, where the second instruction is a message sent by an application processor AP of the UE to the modem after the UE receives the second operation. After the UE receives the second operation, the method further includes: The modem of the UE receives the second instruction.

Before the UE camps on the first NR cell, the method further includes: The UE exits the second timer when timing of the second duration ends or a TAU Accept message corresponding to the TAU request is received.

Optionally, the UE camps on the first NR cell, and sends the fourth registration request to the first NR cell, when second duration elapses after the UE receives the first operation or after the TAU procedure succeeds includes: After exiting the second timer, the UE camps on the first NR cell, and sends the fourth registration request to the first NR cell.

According to a seventh aspect, a communication method is provided. The method includes: User equipment UE camps on a first network. The UE receives a first operation performed by a user on an interface of the UE, where the first operation is used to disable a communication capability of the UE in the first network. After receiving the first operation, the UE camps on a cell of a second network, and initiates a first mobility location update procedure to the cell of the second network, where the first mobility location update procedure includes that the UE sends a first mobility location update request to the cell of the second network, and a standard of the second network is different from a standard of the first network. After receiving the first operation, the UE receives a second operation performed by the user on the interface of the UE, where the second operation is used to enable the communication capability of the UE in the first network. After the UE receives the second operation, when the UE meets a preset condition, the UE camps on a cell of the first network, and sends a first registration request to the cell of the first network, where the first registration request carries indication information indicating that a registration type is initial registration initial registration; and that the UE meets the preset condition includes: The mobility location update procedure is ongoing before the UE sends the first registration request to the cell of the first network.

Optionally, when the first mobility location update procedure is completed, the first registration request is an MRU-type registration request, and the first registration request carries at least partial information about the first mobility location update request.

Optionally, the first network is a 5G network, the second network is a 4G network, the first mobility location update procedure is a TAU procedure, and the first mobility location update request is a TAU request.

According to an eighth aspect, a communication method is provided. The method includes: User equipment UE camps on a first network. When the UE reselects a second network, or the UE is redirected from the first network to the second network, or the UE switches from the first network to the second network, or the UE disables a communication capability of the UE in the first network, the UE camps on a cell of the second network, and initiates a mobility location update procedure to the cell of the second network, where the mobility location update procedure includes that the UE sends a mobility location update request to the cell of the second network. When the UE reselects the first network, or the UE is redirected from the second network to the first network, or the UE switches from the second network to the first network, or the UE enables a communication capability in the first network, and the UE meets a preset condition, the UE camps on a cell of the first network, and sends a first registration request to the cell of the first network, where the first registration request carries indication information indicating that a registration type is initial registration initial registration; and that the UE meets the preset condition includes: The mobility location update procedure is ongoing before the UE sends the first registration request to the cell of the first network.

According to a ninth aspect, a terminal device is provided. The terminal device includes: a memory and a processor, configured to store instructions. The processor is configured to invoke and execute the instructions in the memory, to enable the terminal device to perform the method according to the first aspect and any one of the possible implementations of the first aspect, or the method according to the second aspect and any one of the possible implementations of the second aspect, or the method according to the third aspect and any one of the possible implementations of the third aspect, or the method according to the fourth aspect and any one of the possible implementations of the fourth aspect, or the method according to the fifth aspect and any one of the possible implementations of the fifth aspect, or the method according to the sixth aspect and any one of the possible implementations of the sixth aspect, or the method according to the seventh aspect and any one of the possible implementations of the seventh aspect, or the method according to the eighth aspect and any one of the possible implementations of the eighth aspect.

According to a tenth aspect, a chip system is provided. The chip system includes: a processing circuit, a receiving pin, and a transmitting pin. The receiving pin, the transmitting pin, and the processing circuit communicate with each other through an internal connection path. The processing circuit performs the method according to the first aspect and any one of the possible implementations of the first aspect, or the method according to the second aspect and any one of the possible implementations of the second aspect, or the method according to the third aspect and any one of the possible implementations of the third aspect, or the method according to the fourth aspect and any one of the possible implementations of the fourth aspect, or the method according to the fifth aspect and any one of the possible implementations of the fifth aspect, or the method according to the sixth aspect and any one of the possible implementations of the sixth aspect, or the method according to the seventh aspect and any one of the possible implementations of the seventh aspect, or the method according to the eighth aspect and any one of the possible implementations of the eighth aspect, to control the receiving pin to receive a signal and control the transmitting pin to send a signal.

According to an eleventh aspect, a chip system is provided. The chip system includes a processor, configured to support a terminal device to implement the method according to the first aspect and any one of the possible implementations of the first aspect, or the method according to the second aspect and any one of the possible implementations of the second aspect, or the method according to the third aspect and any one of the possible implementations of the third aspect, or the method according to the fourth aspect and any one of the possible implementations of the fourth aspect, or the method according to the fifth aspect and any one of the possible implementations of the fifth aspect, or the method according to the sixth aspect and any one of the possible implementations of the sixth aspect, or the method according to the seventh aspect and any one of the possible implementations of the seventh aspect, or the method according to the eighth aspect and any one of the possible implementations of the eighth aspect.

Optionally, the processor includes a modem modem.

According to a twelfth aspect, this application further provides a computer-readable storage medium, including computer instructions. When the computer instructions are run on an electronic device, the electronic device is enabled to perform the method according to the first aspect and any one of the possible implementations of the first aspect, or the method according to the second aspect and any one of the possible implementations of the second aspect, or the method according to the third aspect and any one of the possible implementations of the third aspect, or the method according to the fourth aspect and any one of the possible implementations of the fourth aspect, or the method according to the fifth aspect and any one of the possible implementations of the fifth aspect, or the method according to the sixth aspect and any one of the possible implementations of the sixth aspect, or the method according to the seventh aspect and any one of the possible implementations of the seventh aspect, or the method according to the eighth aspect and any one of the possible implementations of the eighth aspect.

According to a thirteenth aspect, this application further provides a computer program product. When the computer program product runs on a computer, the computer is enabled to perform the method according to the first aspect and any one of the possible implementations of the first aspect, or the method according to the second aspect and any one of the possible implementations of the second aspect, or the method according to the third aspect and any one of the possible implementations of the third aspect, or the method according to the fourth aspect and any one of the possible implementations of the fourth aspect, or the method according to the fifth aspect and any one of the possible implementations of the fifth aspect, or the method according to the sixth aspect and any one of the possible implementations of the sixth aspect, or the method according to the seventh aspect and any one of the possible implementations of the seventh aspect, or the method according to the eighth aspect and any one of the possible implementations of the eighth aspect.

It may be understood that the solutions provided in the second aspect to the thirteenth aspect provided in this application may separately correspond to the first aspect and any one of the possible designs of the first aspect. Therefore, beneficial effects that can be achieved are similar. Details are not described herein again.

### BRIEF DESCRIPTION OF DRAWINGS

FIG. 1 is a diagram of a network architecture according to an embodiment of this application;
FIG. 2 is a diagram of a voice call scenario according to an embodiment of this application;
FIG. 3 is a schematic interaction flowchart of a communication method according to an embodiment of this application;
FIG. 4 is a diagram of interface switching logic for a user input operation according to an embodiment of this application;
FIG. 5 is a schematic interaction flowchart of a communication method according to an embodiment of this application;
FIG. 6A and FIG. 6B are a schematic interaction flowchart of a communication method according to an embodiment of this application;
FIG. 7A and FIG. 7B are a schematic interaction flowchart of a communication method according to an embodiment of this application;
FIG. 8A to FIG. 8C are a schematic interaction flowchart of a communication method according to an embodiment of this application;
FIG. 9 is a diagram of interface switching according to an embodiment of this application;
FIG. 10A to FIG. 10C are a schematic interaction flowchart of a communication method according to an embodiment of this application;
FIG. 11 is a diagram of hardware composition of a terminal device according to an embodiment of this application;
FIG. 12 is a diagram of a software structure of a terminal device according to an embodiment of this application;
FIG. 13 is a composition diagram of a terminal device according to an embodiment of this application; and
FIG. 14 is a diagram of composition of a chip system according to an embodiment of this application.

### DESCRIPTION OF EMBODIMENTS

Currently, a terminal device can provide a communication service like a call and network data for a user by accessing a network.

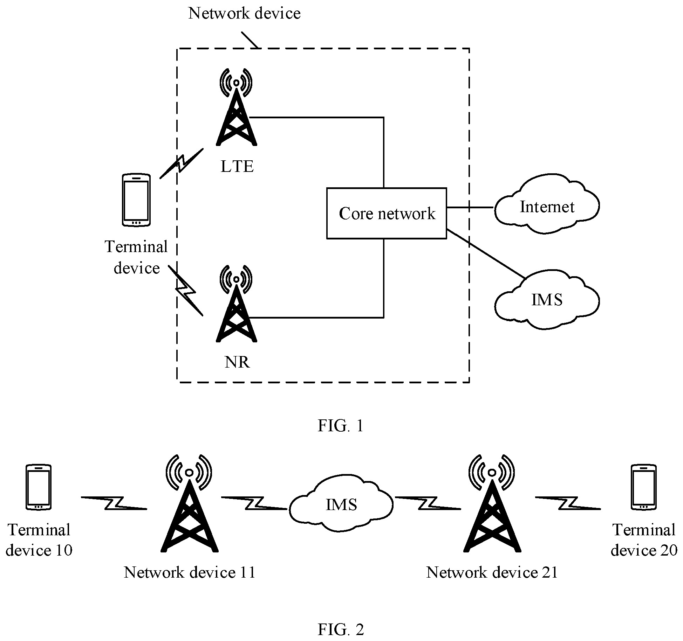

For example, FIG. 1 is a diagram of a network architecture according to an example of an embodiment of this application.

As shown in FIG. 1, the network architecture may include a terminal device, LTE, NR, a core network, and an IP multimedia system (IP Multimedia Subsystem, IMS) or the Internet (Internet).

The following describes the network architecture in detail.
(1) Terminal device (terminal): may also be referred to as user equipment (User Equipment, UE), a user terminal, a mobile station (Mobile Station, MS), a mobile terminal (Mobile Terminal, MT), or the like. The terminal device may be a mobile phone, a wearable device (for example, a smartwatch), or the like.

In some embodiments of this application, an application processor (Application Processor, AP) and a modem (Modem, also referred to as baseband processor, MD for short) may be configured in the terminal device.

The AP can support an interface display capability of the terminal device. The AP can further execute a corresponding response based on a user operation received by the terminal device on an interface. In addition, the MD can support a digital processing capability of the terminal device.

In embodiments of this application, the terminal device may have a 5G communication capability. For example, the 5G communication capability may include: The terminal device has a 5G Standalone (Standalone, SA) networking communication capability with a 5G network device. In some other embodiments, the terminal device may alternatively have a 5G non-standalone (Non-Standalone, NSA) networking communication capability.
(2) LTE: may be understood as a radio access network for a 4G network. In the LTE network (namely, the 4G network), due to an evolutionary relationship, an access network part is referred to as an evolved UMTS terrestrial radio access network (Evolved UMTS Terrestrial Radio Access Network, E-UTRAN). In this application, LTE has the same meaning as E-UTRAN, both meaning the access network part of the 4G network. The terminal device may access the LTE through a 4G base station (for example, an eNB).
(3) NR: may be understood as a radio access network for a 5G network. In a 5G network, an access network part is referred to as a next generation radio access network (Next Generation Radio Access Network, NG-RAN or NG RAN). In this application, the NR has the same meaning as the NG-RAN (or referred to as the NG RAN), both meaning the access network part of the 5G network. The terminal device may access the LTE through a 5G base station (for example, a gNB). In this application, the 5G network may also be referred to as an NR network.

It is understandable that the LTE and the NR are both access networks. The access network is responsible for using a wired or wireless connection and communication technology to progressively connect a large quantity of end users (end users) to a core network (also referred to as a backbone network), implementing a connection to the network. The access network is an edge part of an entire network and is closest to users, generally referred to as a "last kilometer".

(4) Core network: Main functions are to provide user connections, manage users, carry services, and serve as a bearer network to provide an interface to an external network. Establishment of the user connections includes functions such as mobility management (MM), call management (CM), switching/routing, and recording notification (completing a relationship of connecting to a peripheral device of an intelligent network by combining a service of the intelligent network).

It is understandable that a core network of a 4G network is an evolved packet core (Evolved Packet Core, EPC) network. The EPC network is a core network of a 4G mobile communication network. The EPC network belongs to a core network, has conventional capabilities of a mobile network, such as user subscription data storage, mobility management, and data exchange, and provides ultra-high-speed Internet access experience for users. A core network of a 5G network is referred to as a 5G core (5GC for short). The 5GC replaces a dedicated communication device in the 4G network with a general network function virtualization device.

It should be noted that the core network in the network architecture shown in FIG. 1 may be obtained by integrating an EPC and a 5GC. That is, the core network in the network architecture can include network elements in both the EPC and the 5GC. For example, the core network in the network architecture may include an access and mobility management function (Access and Mobility Management Function, AMF) network element, a mobility management entity (Mobility Management Entity, MME) network element, a serving gateway (Serving GateWay, SGW) network element, a packet data network gateway (Packet Data Network GateWay, PGW) network element, a session management function (Session Management Function, SMF) network element, a user plane function (User Plane Function, UPF) network element, and a unified data management function (Unified Data Management, UDM) network element, home subscriber server (such as Home Subscriber Server, HSS) network element, and the like.

In some embodiments of this application, the core network in the network architecture may include a fused network element obtained from the network elements in the EPC and the 5GC, for example, SMF+PGW-C, UPF+PGW-U, or UDM+HSS. PGW-C is a control plane node of the PGW network element, and PGW-U is a user plane node of the PGW network element.

In some embodiments of this application, the core network in the network architecture shown in FIG. 1 may include a proxy session border control (the Proxy Session Border Control, PSBC) network element, which is a composite network element that integrates session border control (Session Border Control, SBC), a proxy call session control function (Proxy-CSCF, P-CSCF), an access transfer control function (Access Transfer Control Function, ATCF), and an access transfer gateway (Access Transfer Gateway, ATGW). An SBC network element connects an IMS core network/a softswitch network to an external user access area, completes service access for IMS/softswitch users, implements interworking of user services in different network environments, ensures IMS/softswitch network security, and supports functions such as QoS management, CAC call admission control, media management, and CDR media call detail record.

Each network element in the core network may also be referred to as a functional entity, and may be a network element implemented on dedicated hardware, or a software instance running on the dedicated hardware, or a virtualized function instance on an appropriate platform.

It should be understood that names of all network elements in this application are merely examples. In future communication, for example, 6G, the network element may be referred to as another name, or in future communication, for example, 6G, the network element in this application may alternatively be replaced with another entity, a device, or the like having a same function. This is not limited in this application. This is uniformly described herein, and details are not described below again. Optionally, various network elements in embodiments of this application may be communication devices, or chips, chip systems, or the like that may operate in the communication device. This is not limited in embodiments of this application.

It may be understood that the core network in the network architecture shown in FIG. 1 may further include another device, network element, network entity, or network subsystem, for example, a policy control function (Policy Control function, PCF) network element. This is not limited in this application. It should be noted that a distribution manner of the network elements in the core network is not limited in this application. For details about the distribution manner, refer to a related technical document. Details are not described herein in this application.

(5) IMS is a network system architecture that provides voice and multimedia communication services (for example, voice, video, and text message) based on an Internet protocol (Internet Protocol, IP) network. The IMS can implement secure and reliable multimedia communication between different devices across various networks. An architectural model provides a same infrastructure and a general mechanism for controlling, operating, routing, and managing sessions, and for implementing authentication, authorization, and accounting control. IMS specifications include widely used recommendations from the Internet engineering task force (The Internet Engineering Task Force, IETF), for example, a session initialization protocol (Session initialization Protocol, SIP) for session control signaling.

The Internet generally means the Internet, also referred to as an international network, and means a vast network formed by interconnected networks. These networks are connected by using a set of general protocols, to form a logically single giant international network. From a perspective of network communication, the Internet is a data communication network that connects computer networks across various countries, regions, and institutions worldwide by using the transmission control protocol (Transmission Control Protocol, TCP)/Internet Protocol (IP).

It should be noted that the network architecture shown in FIG. 1 is not limited to including only the device and the networks in the figure, and may further include another device that is not shown in the figure. Examples are not described again in this application.

For example, the terminal device implements a call service based on the network architecture shown in FIG. 1. An access network device and a core network device may be collectively referred to as a network device.

FIG. 2 is a voice call scenario according to an embodiment of this application.

In an example shown in FIG. 2, a terminal device 10 may be communicatively connected to an IMS by using a network device 11. A terminal device 20 may be communicatively connected to the IMS by using a network device 21. The network device 11 is a network device corresponding to a cell on which the terminal device 10 currently camps, and the network device 21 is a network device corresponding to a cell on which the terminal device 20 currently camps. In some embodiments of this application, the network device 11 and the network device 21 may be a same network device.

It should be noted that a network device in embodiments of this application may be a device used for communication with a terminal device. For example, the network device may include a device corresponding to an access network and/or a device corresponding to the core network shown in FIG. 1. The device corresponding to the access network may also be referred to as an access network device. The device corresponding to the core network may also be referred to as a core network device.

For example, the network device includes the access network device. In some embodiments, the network device may include a base station of a 4G network, for example, an eNB. In some other embodiments, the network device may include a base station of a 5G network, for example, a gNB.

For example, the network device includes the core network device. In some embodiments, the network device may include a 4G core network device. In some other embodiments, the network device may include a 5G core network device.

As shown in FIG. 2, the terminal device 10 may perform data transmission with the terminal device 20 by using the network device 11, the IMS, and the network device 21. In some embodiments of this application, the terminal device 10 may be a party initiating a voice call, and request to perform a voice call with the terminal device 20. In still some other embodiments of this application, the terminal device 20 may be a party initiating a voice call, to request to perform a voice call with the terminal device 10.

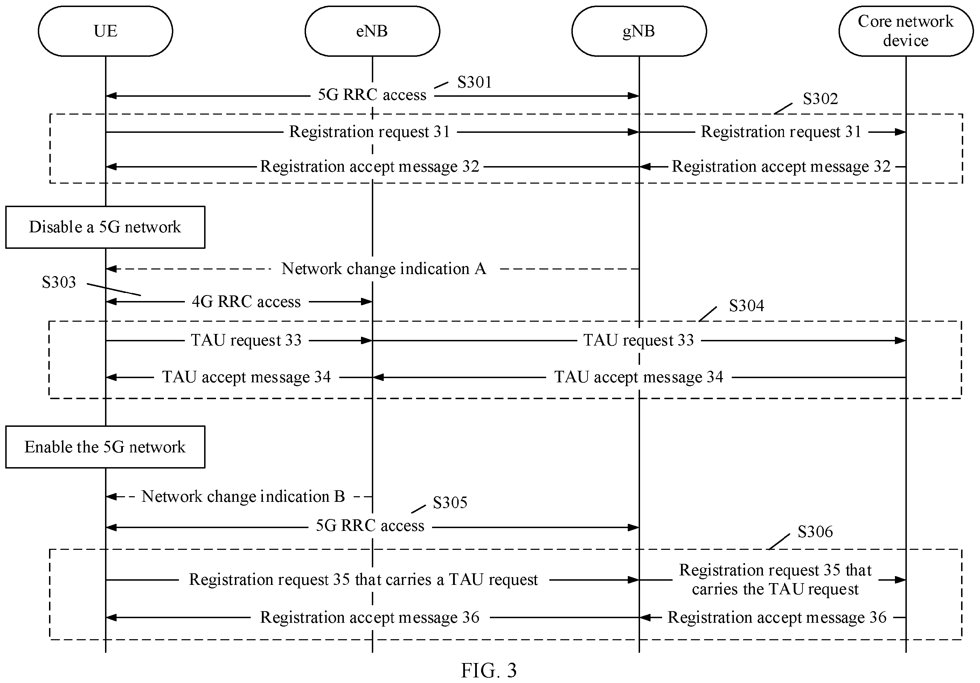

FIG. 3 is a schematic interaction flowchart of a communication method according to an embodiment of this application. A scenario shown in FIG. 3 provides specific implementation in which a terminal device accesses/changes a network to camp on in an actual scenario. Based on this, the terminal device may provide a communication service such as a call and network data after successfully accessing/changing the network to camp on. In the following descriptions, an eNB may correspond to an access network device in the LTE network shown in FIG. 1, namely, a 4G base station, and a gNB may correspond to an access network device of the 5G network shown in FIG. 1, namely, a 5G base station. A core network device may be a logic device set, and the core network device may specifically include a 4G core network device and a 5G core network device.

As shown in FIG. 3, the process may include:
S301: UE performs 5G RRC access to the gNB.

For example, when a plurality of indicated networks (for example, 4G and 5G) exist in a current location, the UE may preferentially access a network of a higher standard (for example, 5G).

In some embodiments, the UE may initiate a random access procedure to the gNB, to implement 5G RRC access to the gNB.

When the UE successfully accesses the gNB, the UE may interact with the 5G core network device via the gNB. For example, the UE may perform the following S302 to initiate a registration procedure to the 5G core network device via the gNB. Further, when the gNB successfully registers with the 5G core network, the UE may provide a communication service of the 5G network for a user via the gNB and the 5G core network device.

S302: The UE registers with the 5G network via the gNB.

For example, registering with the 5G network may specifically include: The UE initiates the registration procedure to the 5G core network device via the gNB. In this process, the gNB may provide forwarding of signaling or a message between the UE and the 5G core network device. For example, the forwarding may be transparent transmission.

As shown in FIG. 3, in some embodiments, S302 may specifically include:

The UE sends a registration request 31 to the gNB, and the gNB sends the registration request 31 to the core network device. For example, the registration request 31 may include a Registration Request message. In some implementations, the registration request 31 may carry a 5GS registration type value (5GS registration type value).

For example, the UE is powered on and performs S302. In this case, the UE may send the registration request 31 to implement initial registration (initial registration). In this example, the 5GS registration type value carried in the registration request 31 may be 001, corresponding to requesting to perform initial registration.

For example, the UE recamps on the 5G network from another network and performs S302. In this case, the UE may send the registration request 31 to implement mobility registration update (mobility registration updating, MRU). In this example, the 5GS registration type value carried in the registration request 31 may be 010, corresponding to requesting to perform mobility registration update.

As shown in FIG. 3, after sending the registration request 31, the UE may receive a registration accept message 32 from the gNB. For example, the registration accept message 32 may be sent by the core network device to the gNB, and transmitted by the gNB to the UE. For example, the registration accept message 32 may include a Registration Accept message.

In some implementations, the registration accept message 32 may carry an indication indicating that a network supports an N26 interface. It may be understood that after the 5G core network is independently deployed, UE that supports only a single-registration mode needs to change (reselect/be redirected) a network frequently to camp on between the 4G network and the 5G network. From a perspective of UE connection, IP address continuity is required, so that the terminal moves as seamlessly as possible between systems, especially for a voice service. The N26 interface enables networks to implement this continuity because the N26 interface enables the networks to switch mobility management (MM) and session management (SM) states of the terminal (UE).

In this case, the UE registers with the 5G network by using the registration request 31 and the registration accept message 32. Further, the UE may provide a communication service for the user over the 5G network. For example, the UE may provide a voice call service shown in FIG. 2 over the 5G network.

In some implementations, after receiving the registration accept message 32, the UE may further send a registration complete message to the core network via the gNB. For example, the registration complete message may include a Registration Complete message.

In this embodiment of this application, the UE may communicate with the gNB by accessing an NR cell (namely, a 5G cell) of the gNB. In some embodiments of this application, after registering with the 5G network, the UE may communicate with the 5G network via the NR cell of the gNB. A case in which the UE successfully establishes an RRC connection to the gNB may also be described as that the UE camps on the NR cell. Correspondingly, if the UE camps on an NR network, it indicates that the UE has completed RRC access to a gNB of the NR network, and has completed registration with a core network device of the NR network.

It may be understood that interaction between the UE and the core network device may be forwarded and transparently transmitted by a corresponding base station. Therefore, in this embodiment of this application, a message sent by the UE to each 5G network device may also be described as a message sent by the UE to an accessed NR cell. Similarly, a message received by the UE from the 5G network device may also be described as a message received by the UE from the corresponding NR cell.

For descriptions of the N26 interface in S302, in a working process of the UE, the network to be camped on is frequently changed between the 4G network and the 5G network.

In some embodiments, when a 5G communication capability of the UE changes, for example, when the 5G communication capability is deactivated, the UE may access another network (for example, the 4G network) to continue to provide a communication service for the user. "Disable a 5G network" as shown in FIG. 3 may be understood as that the 5G communication capability of the UE is deactivated/disabled. For example, that the 5G communication capability of the UE is deactivated/disabled may include: With user involvement, for example, a click by the user on a 5G communication function key to deactivate the 5G communication capability of the UE is received; or without user involvement, the UE disables the 5G communication capability, for example, when a temporary fault occurs, the UE triggers a self-healing mechanism, and in a process of performing the self-healing mechanism, the UE disables the 5G communication capability.

In some other embodiments, when the 5G communication capability of the UE does not change, the UE may alternatively attempt to access another network (such as the 4G network) to continue to provide a communication service for the user. For example, the UE may attempt to access the 4G network through a network reselection procedure. For another example, as shown in FIG. 3, the UE changes, based on a network change indication A sent by the network device (such as a currently connected gNB), to camp on another network (such as the 4G network).

The network change indication A may include: a network redirection indication (for example, an RRCConnectionRelease message that carries a redirectedCarrierInfo indication), and the like. The redirectedCarrierInfo in the RRCConnectionRelease message may include a standard identifier (or referred to as a system identifier) of a redirected 4G network and a frequency.

In some other implementations, the network change indication A may include a network switching indication (for example, a handover message), and the like.

It should be noted that, the UE changing from the 5G network to the 4G network to camp on may be triggered by disabling the 5G network as shown in FIG. 3, or triggered by receiving the network change indication A shown in FIG. 3, or as described in the foregoing example, the UE may actively change, based on the network reselection procedure, from the 5G network to the 4G network to camp on.

Therefore, the UE may perform S303 to attempt to access the 4G network. In some implementations, before performing S303, the UE may disconnect the RRC connection established with the gNB in S301.

S303: The UE performs 4G RRC access to the eNB.

For example, the UE may initiate random access to the eNB in the 4G network, to implement 4G RRC access. When the UE successfully accesses the eNB, the UE may interact with the 4G core network device via the eNB.

S304: The UE registers with the 4G network via the eNB.

For example, S304 may specifically include:
(1) The UE sends a TAU request 33 to the eNB, and the eNB sends the TAU request 33 to the core network device. TAU may be a tracking area update (Tracking Area Update). For example, the TAU request 33 may include a TAU Request message.
(2) The UE receives a TAU accept message 34. For example, the TAU accept message 34 may include a TAU accept message.

In this case, through S304, the UE can change to camp on the 4G network.

In this application, through a TAU procedure shown in S304, when the UE moves from one tracking area (Tracking Area, TA) to another TA, the network may correspondingly change TA information corresponding to the UE, so that the UE can continue to provide a communication service to the UE in the 4G network.

In this embodiment of this application, the UE may communicate with the eNB by accessing an LTE cell (namely, a 4G cell) of the eNB. In some embodiments of this application, after registering with the 4G network, the UE may communicate with the 4G network via a first LTE cell of the eNB. For example, a case in which the UE successfully establishes an RRC connection to the eNB may also be described as that the UE camps on the first LTE cell.

Correspondingly, in S303 and S304, a message sent by the UE to each 4G network device may also be described as a message sent by the UE to the first LTE cell. Similarly, a message received by the UE from the 4G network device may also be described as a message received by the UE from the first LTE cell.

In a scenario shown in FIG. 3, after the UE changes to camp on the 4G network, the UE may further change back to camp on the 5G network.

In some embodiments, when the 5G communication capability of the UE changes, for example, when the 5G communication capability is activated, the UE may recamp on the 5G network to continue to provide a communication service for the user. "Enable the 5G network" as shown in FIG. 3 may be understood as that the 5G communication capability of the UE is activated/enabled. For example, that the 5G communication capability of the UE is changed may include: With user involvement, for example, a click by the user on a 5G communication function key to activate the 5G communication capability of the UE; or without user involvement, the UE enables the 5G communication capability, for example, the UE camps on the 4G network, triggers a self-healing mechanism, and in a process of performing the self-healing mechanism, the UE enables the 5G communication capability.

In some other embodiments, when the 5G communication capability of the UE does not change, the UE may alternatively attempt to access another network (such as the 5G network) to continue to provide a communication service for the user. For example, the UE may attempt to access the 5G network through a network reselection procedure. For another example, as shown in FIG. 3, the UE changes, based on a network change indication B sent by the network device (such as a currently connected eNB), to camp on another network (such as the 5G network).

The network change indication B may include: a network redirection indication (for example, an RRCConnectionRelease message that carries a redirectedCarrierInfo indication), and the like. The redirectedCarrierInfo in the RRCConnectionRelease message may include a standard identifier (or referred to as a system identifier) of a redirected 5G network and a frequency.

It should be noted that, the UE changing from the 4G network to the 5G network to camp on may be triggered by enabling the 5G network as shown in FIG. 3, or triggered by receiving the network change indication B shown in FIG. 3, or as described in the foregoing example, the UE may actively change, based on the network reselection procedure, from the 4G network to the 5G network to camp on.

Correspondingly, the UE may perform S305.

S305: The UE performs 5G RRC access to the gNB.

For example, the UE may also initiate a random access procedure to the gNB, to implement RRC access to the gNB when random access is completed. It should be noted that in some embodiments, an NR cell of the 5G network re-accessed by the UE in S305 may be the same as the NR cell accessed by the UE in S301 and S302. In some other embodiments, the NR cell of the 5G network re-accessed by the UE in S305 is different from the NR cell accessed by the UE in S301 and S302.

S306: The UE registers with the 5G network via the gNB.

For example, the UE may initiate a registration procedure to the 5G core network device via the gNB with the established RRC connection. Further, when registration succeeds, the UE may provide a communication service of the 5G network for the user by using the 5G core network device and the gNB.

In an implementation, as shown in FIG. 3, S306 may specifically include:
(1) The UE sends a registration request 35 to the gNB. The gNB sends the registration request 35 to the core network device (for example, the 5G core network device).

For example, the registration request 35 may include a Registration Request message.

It should be noted that the registration request 35 may carry information about the TAU request. For example, the TAU request in the registration request 35 may correspond to the TAU request 33 in S304. For example, the TAU request in the registration request 35 may include at least partial information in the TAU request 33. In a possible implementation, the TAU request in the registration request 35 may include information about a corresponding MME entity present when the UE accesses the 4G network. In addition, a 5GS registration type value that may be carried in the registration request 35 may be 010, corresponding to requesting to perform mobility registration update.

A mechanism for carrying the TAU request in the registration request 35 may be specified in an existing protocol.

Specifically, it is specified in section 5.5.1.3 of 3GPP 24.501 that, if a registration procedure for mobility and periodic registration update (namely, MRU (Mobility Registration Updating, mobility registration update) and PRU (Periodic Registration Updating, periodic registration update)) meets the following three conditions, the UE needs to include a tracking area update request (TAU request, also briefly referred to as TAU req) message in an EPS NAS message container IE of the Registration Request message sent to the 5G network. The three conditions may include:

Condition 1: The UE in a single-registration mode performs inter-system change from an S1 mode to an N1 mode.

The S1 mode may be understood as an LTE standard, and the N1 mode may be understood as an NR standard. The single-registration mode may mean registering with a network of one standard at a same moment, in contrast to a dual registration mode, which means registering with a network of two standards at a same moment.

Condition 2: If the registration procedure is started in a 5GMM-IDLE mode.

When the UE initiates the registration procedure to a 5G cell (for example, the 5G network device) in a scenario in which the UE receives a network switching indication (for example, a handover message), and switches from the 4G network to the 5G network, the UE is not in the 5GMM-IDLE mode.

When the UE initiates the registration procedure to the 5G network device in a scenario in which the 5G is enabled, or the UE is redirected from the 4G network to the 5G network (also described as being redirected from LTE to NR), or reselects from the 4G network to the 5G network (also referred to as reselecting from LTE to NR), the UE is in the 5GMM-IDLE mode. For example, a process in which the UE is redirected from the 4G network to the 5G network may be triggered after the UE receives the network change indication B.

Condition 3: The UE has received, from a network, an indication indicating that a network side supports the N26 interface.

For example, when the UE initiates an MRU-type registration procedure to an NR cell this time, the UE has received, from the NR cell when the UE registers with the NR cell last time, indication information indicating that the network side supports the N26 interface. The indication information may indicate that a base station corresponding to the NR cell supports the N26 interface, and supporting the N26 interface represents that the base station supports interworking (interworking) between the 4G network and the 5G network.

Related contents in the 3GPP 24.501 protocol are as follows:
5.5.1.3 Registration procedure for mobility and periodic registration update If the UE operating in the single-registration mode performs inter-system change from S1 mode to N1 mode, the UE: shall include a TRACKING AREA UPDATE REQUEST message as specified in 3GPP TS 24.301 [15] in the EPS NAS message container IE in the REGISTRATION REQUEST message if the registration procedure is initiated in 5GMM-IDLE mode and the UE has received an "interworking without N26 interface not supported" indication from the network.

(2) The UE receives a registration accept message 36 from the gNB. The registration accept message 36 may be sent by the core network device to the gNB. For example, the registration accept message 36 may include a Registration Accept message. In this way, the UE can successfully change to camp on the 5G network.

In some implementations, after receiving the registration accept message 36, the UE may further send a Registration Complete message to the core network device (such as the 5G core network device) via the gNB.

As described above, in the scenario shown in FIG. 3, in some implementations, the process in which the UE changes from the 5G network to the 4G network to camp on, or the UE changes from the 4G network to the 5G network to camp on may be triggered by a user input operation.

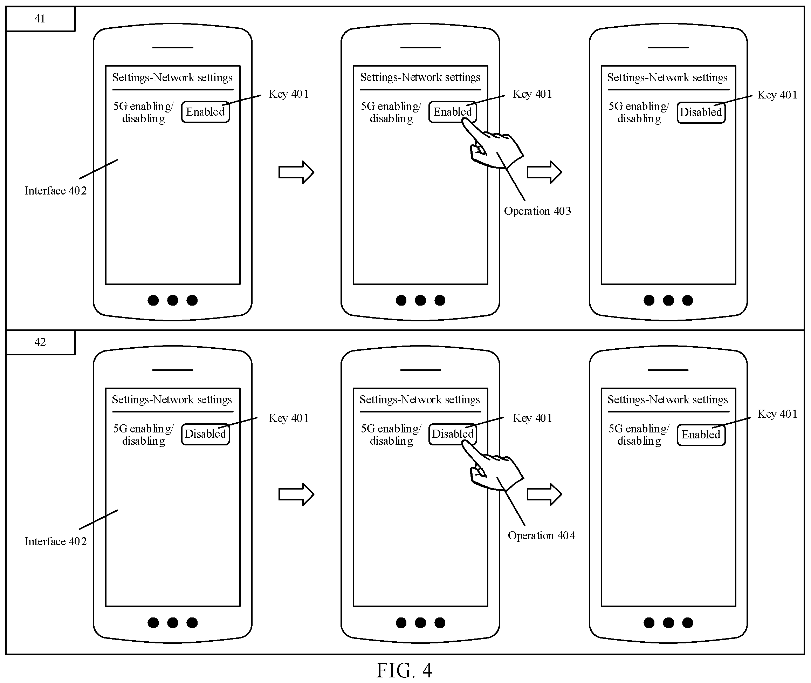

FIG. 4 is an example of interface switching logic for a user input operation. In this example, the UE may present, on an interface to the user, a key 401 that enables or disables the 5G network. In some implementations, the key 401 may be configured in a setting application of the UE. For example, the UE may display, under control of the user, a network setting interface 402 of the setting application. The key 401 may be displayed to the user on this interface 402. By using the key 401, the UE may receive a user operation, and correspondingly enable or disable the 5G network.

For example, based on the logic shown in 41 in FIG. 4, the 5G network may be disabled.

For example, on the interface 402, the 5G network is currently in an enabled state. As shown in Fig. 41, the key 401 can be in an "enabled" state. The user may input an operation 403, to indicate the UE to disable the 5G network. The operation 403 may include clicking the key 401. In response to the operation 403, the UE may change a current status of the 5G network. For example, the status of the 5G network is changed from an "enabled" state to a "disabled" state. Correspondingly, the UE may correspondingly display a latest status as "disabled" on the key 401. In this case, after the user inputs the operation 403, the UE may trigger S303 and S304 shown in FIG. 3, to attempt to access the 4G network to continue communication. In this application, the operation 403 may also be referred to as a first operation. Correspondingly, the first operation may be used to indicate the UE to disable the 5G communication capability.

Based on the logic shown in 42 in FIG. 4, the 5G network may be enabled.

For example, on the interface 402, the 5G network is currently in a disabled state. As shown in Fig. 42, the key 401 may be in a "disabled" state. The user may input an operation 404, to indicate the UE to enable the 5G network. The operation 404 may include clicking the key 401. In response to the operation 404, the UE may change a current status of the 5G network. For example, the status of the 5G network is changed from a "disabled" state to an "enabled" state. Correspondingly, the UE may correspondingly display a latest status as "enabled" on the key 401. In this case, after the user inputs the operation 404, the UE may trigger S305 and S306 shown in FIG. 3, to attempt to access the 5G network to continue communication. In this application, the operation 404 may also be referred to as a second operation. Correspondingly, the second operation may be used to indicate the UE to enable the 5G communication capability.

In this case, based on implementation of the solution shown in FIG. 3, the UE may implement a plurality of processes of changing from the 5G to the 4G to the 5G to camp on. As shown in S306, after the UE changes back to camp on the 5G network, the registration request 35 sent to the network device carries the TAU request according to a protocol specification. In this case, after registration with the 5G network shown in S306 is completed, the UE may communicate with the 5G network, to implement a service, such as a voice call and an SMS message over the 5G network.

It may be understood that, after receiving the registration request 35, the network side (for example, the 5G core network device) may need to perform some synchronization by using the TAU request in the registration request 35 (for example, obtain context information of the UE from the MME entity indicated by the TAU request in the 4G network), so that based on synchronization between the network side and the UE, the network side provides, over the current 5G network, the UE with a function of receiving a voice call or an SMS message. Therefore, in this scenario, when the registration request sent by the UE to the 5G network device is of an MRU type, the TAU request needs to be carried in the registration request.

In a current actual network environment, in a process in which the UE changes from the 4G to the 5G to camp on, the registration request 35 sent by the UE to the network device may not carry the TAU request. In this case, the network side cannot synchronize with the UE based on the TAU request, further resulting in a problem that the UE fails to receive a call or an SMS message for a long time.

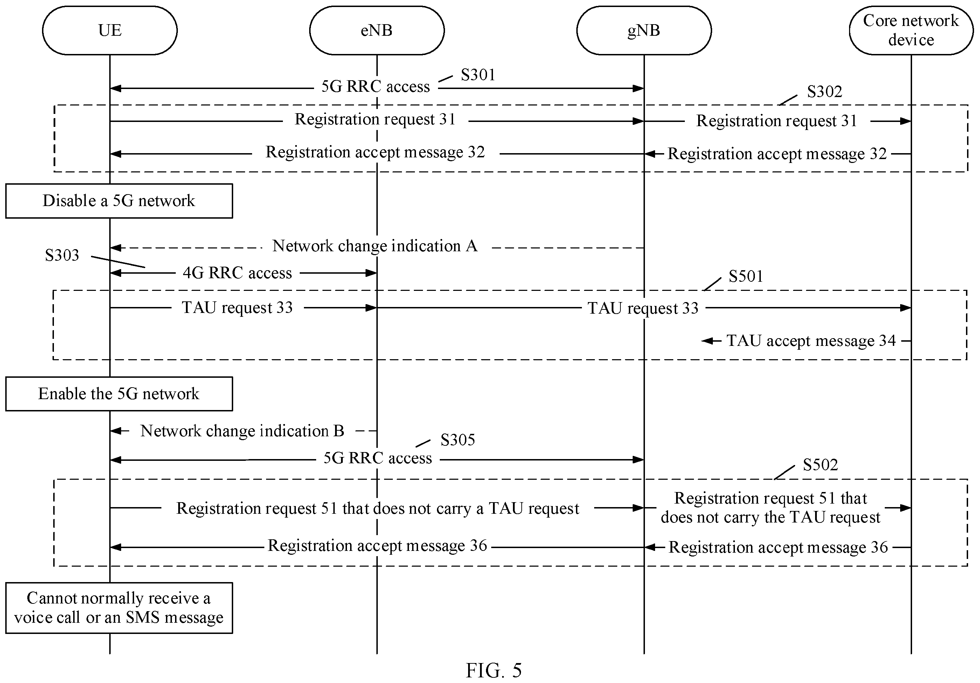

For example, refer to an example shown in FIG. 5. In comparison with FIG. 3, in FIG. 5, S304 may be replaced with S501.

That is, in a scenario shown in FIG. 5, after the UE implements 4G RRC access to the eNB in S303, the UE may perform S501.

In S501, the UE may send a TAU request 33 to the eNB. The eNB may send the TAU request 33 to a corresponding 4G core network device.

In the example shown in FIG. 5, when the UE has not received a TAU accept message 34, the UE receives an operation that the user indicates to enable the 5G network (for example, the operation 404 shown in FIG. 4), or receives a network change indication B sent by an eNB on which the UE currently camps, or actively initiates network reselection to the 5G network, or actively disables the 5G network.

In this case, before receiving the TAU accept message 34, the UE changes to camp on the 5G network.

For example, before receiving the TAU accept message 34, the UE initiates access to the 5G network to the gNB, and then initiates MRU-type registration with the 5G core network via the gNB.

Therefore, even if the 4G core network device sends the TAU accept message 34 to the eNB, the TAU accept message 34 cannot be successfully received (for example, cannot be received in time over the 4G network) by the UE due to rapid switching between standards and switching between frequencies (for example, the user quickly performs the operation 404 after the operation 403). Consequently, a TAU procedure corresponding to a process in which the UE performs S501 is not completed.

With reference to specifications in section 5.5.1.3 of 3GPP 24.501, when the UE re-initiates registration to the network device (for example, re-initiates registration to the 5G network), one of conditions for carrying the TAU request in the registration request is that the UE in the single-registration mode performs inter-system change from an S1 mode to an N1 mode.

However, in the scenario shown in FIG. 5, because the TAU procedure corresponding to the process in which the UE performs S501 is not completed, the UE does not complete inter-system change from the S1 mode to the N1 mode. Therefore, the UE re-registers with the 5G network, and in a process of performing S502, a registration request 51 sent by the UE does not carry the TAU request. Further, the 5G network device does not synchronize with the UE based on the TAU request. Consequently, even if the UE successfully registers with the 5G network, the UE cannot receive a voice call or an SMS message over the 5G network.

It may be understood that, in the scenario shown in FIG. 5, after the UE sends the TAU request 33 and before a network side returns a TAU accept message to the UE, procedures such as SecurityModeCommand (a security mode command) may need to be performed between the network side and the UE. Execution of these procedures takes some time. In this case, if the user enables the 5G on the UE before the UE can receive a TAU accept message returned by an LTE network, the UE cannot receive the TAU accept message returned by the LTE network. Correspondingly, an AP of the UE sends indication information to a modem to indicate that the UE supports the 5G. After receiving the indication information of the AP, the modem searches for an NR cell and camps on one NR cell, and then initiates a registration (REGISTRATION) procedure to the NR cell.

Because the UE does not receive the TAU accept message returned by the LTE network, the UE side considers that the previous TAU procedure is not completed. Therefore, the UE does not consider that it is time now to perform inter-system change from the S1 mode to the N1 mode. As a result, the UE does not include the TAU request (TAU request, or briefly referred to as TAU req) in the REGISTRATION REQUEST message used to initiate the registration procedure to the NR cell. However, the network side (in this case, the NR network) may need to perform some synchronization by using the TAU req in the registration request REGISTRATION REQUEST. Because the UE does not include the TAU req in the registration request (for example, which may be an MRU-type registration request), the UE cannot synchronize with the network side. Therefore, after the UE completes registration, resulting in a problem that the UE (for example, a mobile phone) fails to receive a call or an SMS message for a long time. Consequently, user experience is poor.

It may be understood that a root cause of a call failure is that when the UE rechanges to camp on the 5G network, the REGISTRATION REQUEST message sent by the UE to the network side does not carry the TAU request message because the UE considers that inter-system change from the S1 mode to the N1 mode is not performed, that is, the terminal considers that the condition 1 is not met. However, a reason why the UE considers that inter-system change from the S1 mode to the N1 mode is not performed is that the TAU procedure is not completed (the TAU accept message is not received). Therefore, in the technical solution provided in this embodiment of this application, one manner in which the terminal considers that the condition 1 is met may be that the UE waits until the TAU procedure is completed in the LTE network, and then returns to the NR network, and another manner may be that if the UE has successfully sent the TAU request and does not receive a TAU reject message, it may be considered that the UE has camped on the LTE network. In this case, the UE returns to the NR network, and the UE may consider that the condition for inter-system change from the S1 mode to the N1 mode is met. When the condition 1 is met, if the conditions 2 and 3 are also met, that is, (2) if the registration procedure is started in a 5GMM-IDLE mode, and (3) the UE has received, from the network, the indication indicating that the network supports the N26 interface are met, the UE should include the TAU request message in the REGISTRATION REQUEST message.

In this way, after rechanging to camp on the 5G network, the UE can normally receive a voice call or an SMS message over the 5G network.

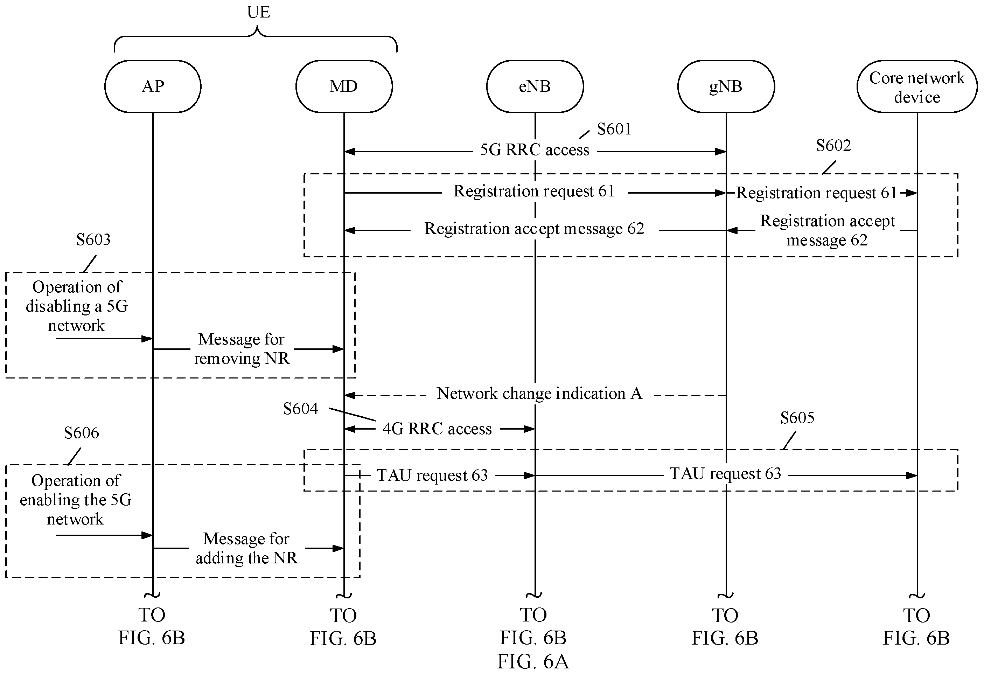

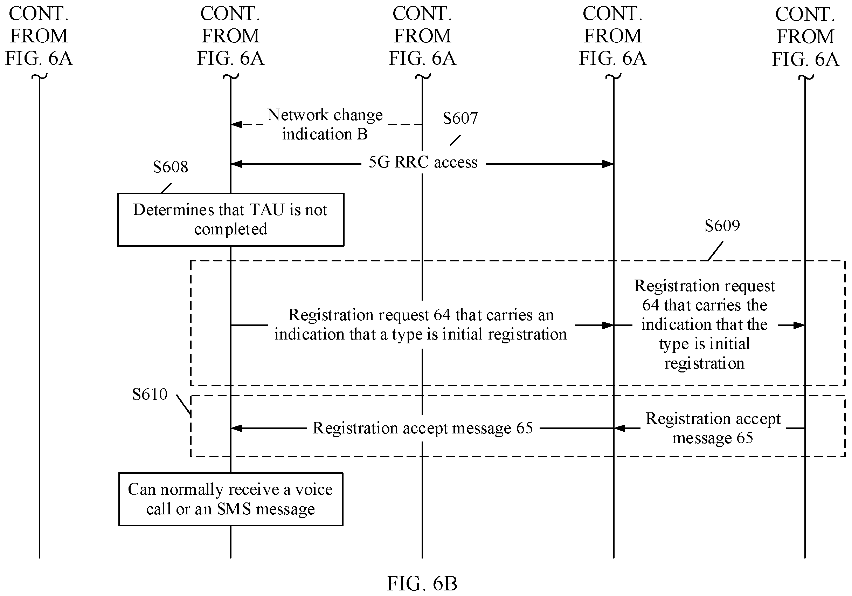

FIG. 6A and FIG. 6B are a schematic interaction flowchart of a communication method according to an embodiment of this application. As shown in FIG. 6A and FIG. 6B, the solution may include the following steps.

S601: UE performs 5G RRC access to a gNB.

For an execution step of S601, refer to S301 shown in FIG. 3.

For example, the UE may initiate a random access procedure to the gNB, to implement 5G RRC access to the gNB.

S602: The UE registers with a 5G network via the gNB.

For an execution step of S602, refer to S302 shown in FIG. 3.

For example, the step may specifically include:
(1) The UE sends a registration request 61 to the gNB, and the gNB sends the registration request 61 to a core network device. The registration request 61 may include a Registration Request message. In some implementations, the registration request 61 may carry a 5GS registration type value (5GS registration type value). For example, the 5GS registration type value carried in the registration request 61 may be 001, corresponding to performing initial registration.

For ease of description, in this application, a registration request that carries a 5GS registration type value that indicates to perform initial registration may be briefly referred to as an initial registration-type registration request. A corresponding registration procedure may be referred to as an initial registration-type registration procedure.

Conversely, a registration request that carries a 5GS registration type value that indicates to perform MRU may be briefly referred to as an MRU-type registration request. A corresponding registration procedure may be referred to as an MRU-type registration procedure.

(2) The UE receives a registration accept message 62 from the gNB. For example, the registration accept message 62 may include a Registration Accept message.

In some implementations, the registration accept message 62 carries an indication indicating that an N26 interface is supported.

In some implementations, after receiving the registration accept message 62, the UE may further send a Registration Complete message to a 5G network device.

In this way, the UE may communicate over the 5G network. For example, the UE may function as a called device, and can normally receive a voice call or an SMS message over the 5G network.

S603: The UE receives an operation of disabling the 5G network by a user.

For example, the operation of disabling the 5G network may correspond to the operation 403 shown in FIG. 4.

With reference to the foregoing descriptions of a terminal device (namely, the UE), in this example, the UE may be configured with an AP and an MD.

In this case, the AP may receive the operation 403 input by the user. Correspondingly, the AP may generate a message for removing NR. The AP may send, to the MD of the UE for corresponding processing, the message for removing the NR. In some embodiments, the message for removing the NR may also be referred to as a first instruction.

Correspondingly, the MD may trigger a UE remove NR capability based on the message for removing the NR, that is, trigger a 5G communication capability of the UE to be disabled. For example, after receiving the message for removing the NR, the MD may trigger access to a 4G network. In this case, the UE may correspondingly perform S604.

It should be noted that, with reference to the descriptions of S302, the operation of disabling the 5G network by the user in S603 may be one of a plurality of possible cases in which the 5G communication capability of the UE is deactivated/disabled. In some other embodiments of this application, that the 5G communication capability of the UE is deactivated/disabled may alternatively be that without user involvement, the UE automatically disables the 5G communication capability. When the 5G communication capability of the UE is deactivated/disabled (or when the UE disables the 5G communication capability of the UE), the UE may perform S604.

In some other embodiments of this application, when the 5G communication capability of the UE does not change, the UE may alternatively attempt to access another network (such as the 4G network) to continue to provide a communication service for the user. For example, the UE may attempt to access the 4G network through a network reselection procedure. For another example, as shown in FIG. 6A, the UE changes, based on a network change indication A sent by a network device (such as the currently connected gNB), to camp on another network (such as the 4G network). The network change indication A may include: a network redirection indication A1, or a network switching indication A2.

The network redirection indication A1 may include an RRCConnectionRelease message that carries a redirectedCarrierInfo indication. The redirectedCarrierInfo indication in the network redirection indication A1 may include a standard identifier (or referred to as a system identifier) of the 4G network to which the 5G network device currently camping on the 5G network indicates that the UE is redirected, and a frequency.

The network switching indication A2 may include a Handover message. The Handover message in the network switching indication A2 may include a standard identifier (or referred to as a system identifier) of the 4G network to which the 5G network device indicates that the UE needs to switch, and a frequency.

The following descriptions use an example in which the UE deactivates/disables the 5G communication capability based on the received operation of disabling the 5G network by the user in S603, and further performs S604.

S604: The MD of the UE performs 4G RRC access to an eNB.

For an execution step of S604, refer to S303 shown in FIG. 3.

For example, the MD of the UE may initiate random access to the eNB in the 4G network, to implement 4G RRC access.

In some embodiments, before performing S604, the UE may disconnect the RRC connection to the gNB.

S605: The MD of the UE sends a TAU request 63 to a 4G network device.

For an execution step of S605, refer to the related descriptions of S304. The TAU request 63 may correspond to the TAU request 33 shown in FIG. 3. In this example, the TAU request 63 may include a TAU Request message.

It should be noted that, in some embodiments of this application, a field corresponding to a TAU status may be configured in the MD of the UE.

When the field corresponding to the TAU status is configured to different values, the values may respectively indicate that TAU unregistered, TAU registering, TAU registered, and TAU failed.

After sending the TAU request 63 to the 4G network device, the UE configures the TAU status as TAU registering.

S606: The AP of the UE receives an operation of enabling the 5G network by the user.

The operation of enabling the 5G network by the user may correspond to the operation 404 shown in FIG. 4.

In this case, the AP may receive the operation 404 input by the user. Correspondingly, the AP may generate a message for adding NR. The AP may send, to the MD of the UE for corresponding processing, the message for adding the NR. In some embodiments, the message for adding the NR may also be referred to as a second instruction.

Correspondingly, the MD may perform access to the 5G network based on the message for adding the NR. In this case, the UE may correspondingly perform S607.

It should be noted that, with reference to the descriptions of S304, the operation of enabling the 5G network by the user in S606 may be one of a plurality of possible cases in which the 5G communication capability of the UE is activated/enabled. In some other embodiments of this application, that the 5G communication capability of the UE is activated/enabled may alternatively be that without user involvement, the UE automatically enables the 5G communication capability. When the 5G communication capability of the UE is activated/enabled (or may be expressed as when the UE enables the 5G communication capability of the UE), the UE may perform S607.

In some other embodiments of this application, when the 5G communication capability of the UE does not change, the UE may alternatively attempt to access another network (such as the 5G network) to continue to provide a communication service for the user. For example, the UE may attempt to access the 5G network through a network reselection procedure. For another example, as shown in FIG. 6B, the UE changes, based on a network change indication B sent by the network device (such as a currently connected gNB), to camp on another network (such as the 5G network). The network change indication B may include a network redirection indication B1.

The network redirection indication B1 may include an RRCConnectionRelease message. The RRCConnectionRelease message in the network redirection indication B1 may carry a redirectedCarrierInfo indication. The redirectedCarrierInfo indication may include a standard identifier (or referred to as a system identifier) of the 4G network to which the 5G network device indicates that the UE is redirected, and a frequency.

Compared with the network change indication A, the network change indication B may not include a network switching indication.

It should be noted that, in this example, after performing S605, the UE may correspondingly perform S607 before receiving a corresponding response (for example, a TAU accept message that carries a TAU Accept message, or a TAU reject indication that carries a TAU Reject message). That is, when the TAU status is TAU registering, the UE may correspondingly perform S607.

In this case, when the UE reselects the NR, or the UE is redirected from LTE to the NR, or the UE switches from the LTE to the NR, or the UE enables the 5G communication capability of the UE, the modem searches for an NR cell and camps on one NR cell, and then initiates an RRC access procedure and a registration procedure to the NR cell.

S607: The MD of the UE performs 5G RRC access to the gNB.

For an execution step of S607, refer to S305 shown in FIG. 3.

For example, the UE may initiate a random access procedure to the gNB, to implement RRC access to the 5G network when random access is completed.

S608: The MD of the UE determines that TAU is not completed.

In this embodiment of this application, the UE performs S608 before initiating registration with a 5G core network device.

For example, in some embodiments, that TAU is not completed may be understood as that a TAU procedure is ongoing.

For example, the MD of the UE may determine, based on a sent TAU request (such as the TAU request 63) but no corresponding TAU accept message received, that the TAU is not completed.

For another example, the MD of the UE may determine, based on a sent TAU request (such as the TAU request 63) but no corresponding TAU accept message or TAU Reject message received, that the TAU is not completed.

For another example, the MD of the UE may query the TAU status field. When the TAU status field correspondingly indicates TAU registering, it is determined that the TAU is not completed.

In this example, the UE may perform S609 when determining that the TAU is not completed.

In some other embodiments, the UE may further determine the foregoing condition 2 and/or condition 3. The UE may perform S609 when the TAU is not completed and the condition 2 is met. Alternatively, the UE may perform S609 when the TAU is not completed and both the condition 2 and the condition 3 are met.

As described above, the condition 2 may include: The UE registers with the 5G network in a 5GMM-IDLE mode.

The condition 3 may include: The UE has received, from a network, an indication indicating that a network side supports the N26 interface.

For example, the MD determines whether the condition 2 is met.

In some embodiments, before triggering S607 to be performed, if the MD may determine that the MD receives the operation of enabling the 5G network by the user, receives a network redirection indication, or reselects a network, compliance of the condition 2 is determined to be passed/successful. On the contrary, when the foregoing conditions are not met, compliance of the condition 2 is determined to be unpassed/failed. For example, before triggering S607 to be performed, if the MD may determine that the MD receives the network switching indication, compliance of the condition 2 is determined to be unpassed/failed.

In some other embodiments, an identifier of a 5GMM state field configured for the AP or the MD of the UE is used as an example. When the 5GMM state field is configured to different values, the values may correspondingly indicate that the UE is in a 5GMM-IDLE state or that the UE is in a 5GMM-Active state. In this case, the MD may query the identifier of the 5GMM state field. When the identifier of the 5GMM state field indicates that the UE is in a 5GMM-IDLE state, compliance of the condition 2 is determined to be passed/successful. On the contrary, when the identifier of the 5GMM state field state indicates that the UE is in a state (for example, a 5GMM-Active state) other than the 5GMM-IDLE state, compliance of the condition 2 is determined to be unpassed/failed.

For example, the MD determines whether the condition 3 is met.

The MD may query whether an indication indicating that an N26 interface is supported is received from a network device that is to access the 5G network. When the UE has camped on the 5G network and correspondingly received the indication indicating that the N26 interface is supported from the 5G network device, compliance of the condition 3 is determined to be passed/successful. On the contrary, when the UE has not camped on the 5G network and correspondingly received no indication indicating that the N26 interface is supported from the 5G network device, compliance of the condition 3 is determined to be unpassed/failed.

It should be noted that, in a specific implementation process, a sequence in which the MD determines whether the foregoing conditions are met is not limited. Specific execution may be parallel or sequential. This is not limited in this embodiment of this application.

In some implementations, "TAU is not completed" may also correspond to meeting a preset condition configured in the MD.

For example, in some embodiments of this application, the MD of the UE determines that the TAU is not completed, and another condition being met may correspond to: The TAU procedure is ongoing before the UE sends a registration request (such as a subsequent registration request 64) to a first NR cell. The TAU procedure may be a TAU procedure for the 4G network. For example, the TAU procedure may be initiated by sending the TAU request 63 in S605. Correspondingly, after the UE sends the TAU request 63, receiving the TAU Accept message corresponds to a successful end of the TAU procedure; receiving the TAU Reject message corresponds to a failure of the TAU procedure; and not receiving the TAU Accept message or the TAU Reject message corresponds to the TAU procedure being ongoing.

S609: The MD of the UE sends a registration request 64 to the 5G network device.

For example, the UE may send the registration request 64 to the gNB. Correspondingly, the gNB may transparently transmit the registration request 64 to the 5G core network device. In some embodiments, the registration request 64 may also be referred to as a first registration request.

In this example, the registration request 64 may include a Registration Request message. In addition, a 5GS registration type value carried in the registration request 64 may be 001, corresponding to requesting to perform initial registration (initial registration).

S610: The MD of the UE receives a registration accept message 65.

For example, the registration accept message 65 may include a Registration Accept message. In some implementations, after receiving the registration accept message 65, the UE may further send a Registration Complete message to a 5G network device.

It may be understood that if the TAU procedure is not completed (that the TAU procedure is not completed can be understood as that the TAU procedure is still ongoing, for example, after sending the TAU request, the modem has received neither a TAU reject message (TAU reject) sent by the LTE network, nor a TAU accept message sent by the LTE network) after the modem of the UE successfully sends a TAU request on the LTE and before the modem sends a REGISTRATION REQUEST (registration request) message that is used to initiate the foregoing registration procedure to the NR cell (for example, when the modem prepares to send the REGISTRATION REQUEST (registration request) message to the NR cell, or when the modem receives the second instruction), in this case, according to a protocol, the modem of the UE sends a registration request to the NR cell, and includes, in the registration request, indication information indicating that a registration type is mobility registration update (Mobility Registration Updating, MRU), and the registration request does not carry TAU req. In this embodiment, in this case, the modem of the UE may send a registration request to the NR cell, and include, in the registration request, indication information indicating that a registration type is initial registration (initial registration) (in this case, the registration request does not need to carry the TAU req). In this case, the UE initiates the initial registration to the NR cell. After the initial registration is completed (for example, the UE receives a registration accept registration accept message returned by the NR cell), the UE and the NR cell are synchronous. In this case, if another user calls the UE, the UE can be normally called as a called party.

Alternatively, in the example shown in FIG. 3, when the UE receives the TAU Accept message, the 5GS registration type value that may be carried in the registration request 35 may be 010, corresponding to requesting to perform mobility registration update.

In the example shown in FIG. 6B, when the UE determines that the TAU is not completed in S608, the UE may initiate the initial registration-type registration procedure (for example, the UE sends a registration request 64 whose registration type is initial registration in S609), but not perform a mobility registration update procedure shown in FIG. 5 (for example, the UE sends the registration request 51 that does not carry the TAU request in S502). This avoids a problem of failed synchronization between the network side and the UE in the mobility registration update procedure of the 5G network device shown in FIG. 5 because the registration request does not carry the TAU request. Correspondingly, through an initial registration procedure, the network side may re-perform information synchronization with the UE, so that after the UE successfully registers with the 5G network by using S609 and S610, the UE can normally receive a call or an SMS message.

It should be noted that in this embodiment of this application, when a TAU procedure for the 4G network is completed (for example, the TAU accept message corresponding to the TAU request 63 is received), in a process of changing to camp on the 5G network, the UE may send an MRU-type registration request to the 5G network device based on S306 shown in FIG. 3, to request to perform mobility registration update to the 5G network.

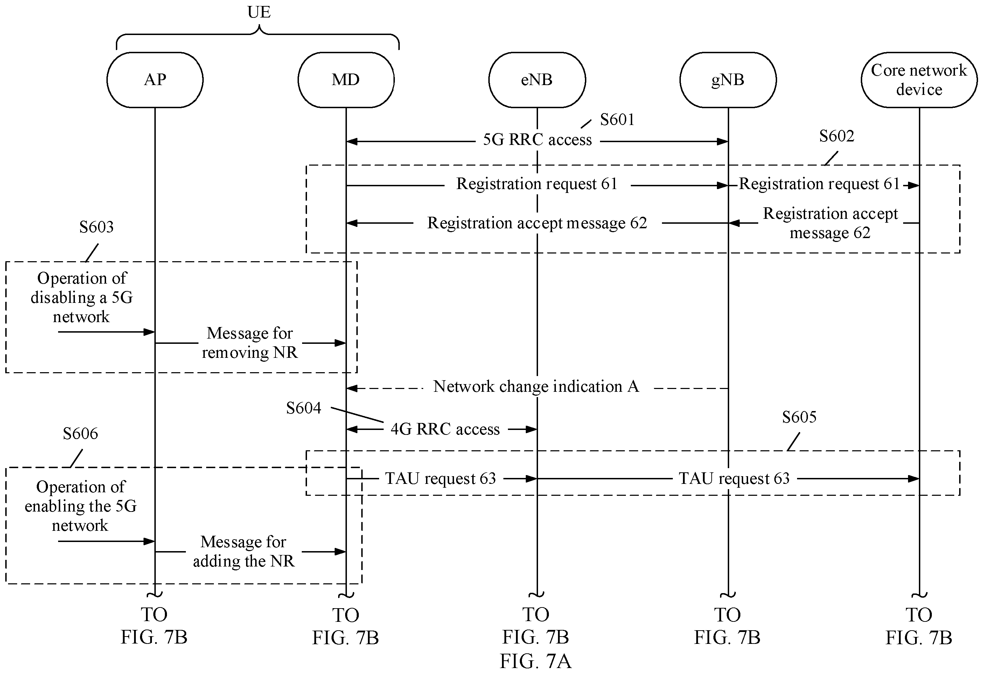

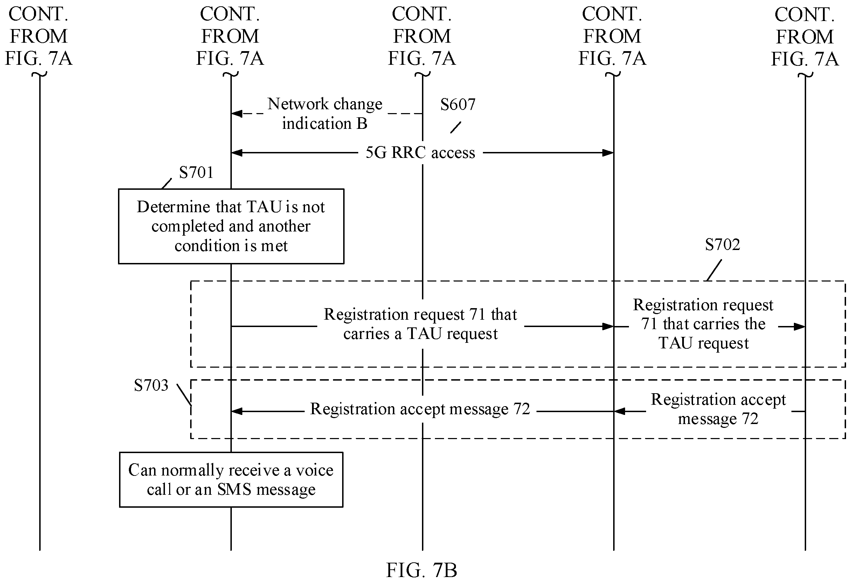

FIG. 7A and FIG. 7B are a schematic interaction flowchart of another communication method according to an embodiment of this application. With reference to the descriptions of the solution shown in FIG. 6A and FIG. 6B, as shown in FIG. 7A and FIG. 7B, the solution may also include S601 to S607. For implementation of all steps, refer to descriptions of FIG. 7A and FIG. 7B. Details are not described herein again.

During implementation of the solution shown in FIG. 7A and FIG. 7B, after the UE performs S607 and successfully accesses the NR cell, the UE may perform S701 to S703.

S701: The MD of the UE determines that TAU is not completed and another condition is met. For example, in this example, in addition to determining that the TAU is not completed, the UE may further determine that the another condition (for example, a condition 2, or the condition 2 and a condition 3) is met. For specific implementation, refer to the related descriptions of S608. Details are not described herein again.

S702: The MD of the UE sends a registration request 71 to the 5G network device.

The registration request may include a Registration Request message. In some embodiments of this application, the registration request 71 may also be referred to as a second registration request.

The registration request 71 carries a TAU request. The TAU request may include at least partial information in the TAU request 63 in S605 in FIG. 6A or FIG. 7A and FIG. 7B. For example, the TAU request carried in the registration request 71 may include related information about a corresponding MME entity in the 4G network present when the UE registers with the 4G network device.

In a specific implementation, the MD may carry an Eps_nas_msg_container field in the sent registration request 71. Eps_nas_msg_container may include that Eps_nas_msg[]=72. A message indicating that Eps_nas_msg[]=72 corresponds to a TAU request message.

In the example shown in FIG. 7B, a type of the registration request 71 is not limited.

For example, in some embodiments, a 5GS registration type value carried in the registration request 71 may be 001, corresponding to requesting to perform initial registration. In some other embodiments, the 5GS registration type value carried in the registration request 71 may be 010, corresponding to requesting to perform mobility registration update.

S703: The MD of the UE receives the registration accept message 72.

For example, the registration accept message 72 may include a Registration Accept message. In some implementations, after receiving the registration accept message 72, the UE may further send a Registration Complete message to a 5G network device.

It may be understood that, during implementation of the solution provided in FIG. 7A and FIG. 7B, if the modem has successfully sent the TAU request over the LTE when receiving the second instruction, and has not received the TAU reject message after sending the TAU request until the modem receives the second instruction modem, it may be considered that the UE has camped on the LTE network. In this case, if the modem returns to the NR network in response to the received second instruction, it may be considered that the UE meets a condition for inter-system change from an S1 mode to an N1 mode. The foregoing MRU-type registration procedure initiated to the NR cell occurs in a scenario in which the user enables the 5G. It can be learned that the registration procedure is started in a 5GMM-IDLE mode. Further, the modem of the UE may carry a TAU request message in the REGISTRATION REQUEST (registration request) message that is sent to the NR cell and that is used to initiate the foregoing registration procedure, provided that the UE has received, from a network, indication information indicating that the N26 interface is supported.

Therefore, during implementation of the solutions shown in FIG. 6A and FIG. 6B and FIG. 7A and FIG. 7B, if the UE has successfully sent the TAU request, it may be considered that the UE has camped on the LTE network provided that the UE does not receive the TAU reject message. In this case, if the UE returns to the 5G network, the UE may consider that the condition for inter-system change from the S1 mode to the N1 mode is met. When a condition 1 is met, if the conditions 2 and 3 are also met, the UE may initiate the initial registration-type registration procedure or the MRU-type registration procedure, to send the registration request that carries the TAU request. In this way, the network side synchronizes with the UE based on the initial registration, or the TAU request in the registration request. Further, after changing to camp on the 5G network, the UE can receive a voice call or an SMS message from the 5G network.

In some other embodiments of this application, after camping on the LTE network, the UE may further wait for a time period before initiating registration with the 5G network. Therefore, in this case, in this waiting time period, after receiving the TAU accept message (for example, the TAU accept message), the UE initiates registration with the 5G network. In this way, according to a protocol specification, the conditions 1 to 3 may be met, so that the UE normally camps on the 5G network according to implementation of the solution shown in FIG. 3, and can receive a voice call or an SMS messages over the 5G network.

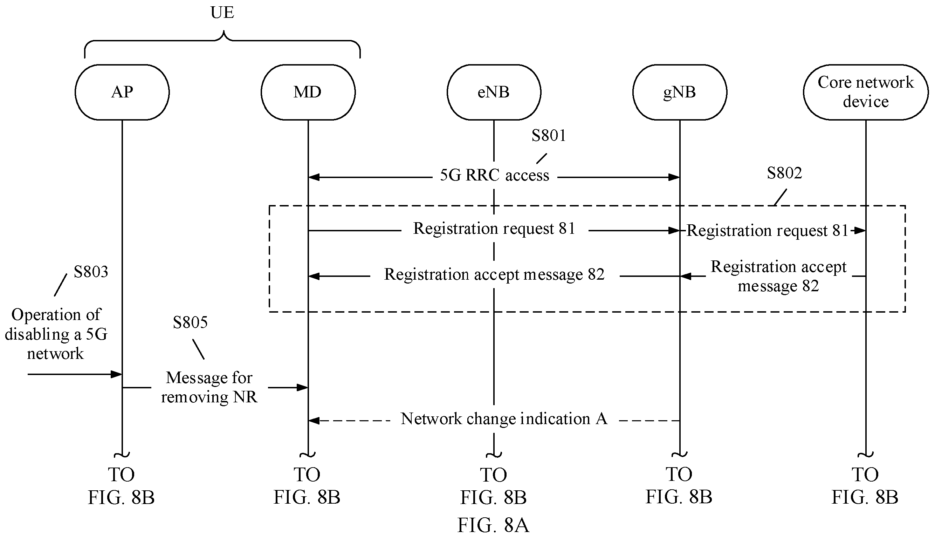

As a specific example, FIG. 8A to FIG. 8C are a schematic interaction flowchart of still another communication method according to an embodiment of this application. As shown in FIG. 8A to FIG. 8C, the solution may include the following steps.

S801: An MD of UE performs 5G RRC access to a gNB.

For an execution step of S801, refer to S601 shown in FIG. 6A or FIG. 7A.

For example, the MD of the UE may initiate a random access procedure to the gNB, to implement 5G RRC access to the gNB.

S802: The MD of the UE registers with a 5G network via the gNB.

For an execution step of S802, refer to S602 shown in FIG. 6A.

For example, the step may specifically include:
(1) The UE sends a registration request 81 to the gNB, and the gNB sends the registration request 81 to a core network device. The registration request 81 may include a Registration Request message. In some implementations, the registration request 81 may carry a 5GS registration type value (5GS registration type value). For example, the 5GS registration type value carried in the registration request 81 may be 001, corresponding to performing initial registration.
(2) The UE receives a registration accept message 82 from the gNB. For example, the registration accept message 82 may include a Registration Accept message. In some implementations, the registration accept message 82 carries an indication indicating that an N26 interface is supported.

In some implementations, after receiving the registration accept message 82, the UE may further send a Registration Complete message to a 5G network device.

In this way, the UE may communicate over the 5G network. For example, the UE may function as a called device, and can normally receive a voice call or an SMS message.

S803: An AP of the UE receives an operation of disabling the 5G network by a user.

For execution of step S803, refer to S603 shown in FIG. 6A.

For example, the operation of disabling the 5G network may correspond to the operation 403 shown in FIG. 4.

In this embodiment, after receiving the operation of disabling the 5G network by the user, the AP of the UE may trigger S804 and S805 to be performed. In different implementations, a sequence of performing S804 and S805 may not be limited.

S804: The AP of the UE starts a timer T1. During timing of the timer T1, 5G enabling or disabling is inoperable.

For example, in some embodiments, after receiving the operation of disabling the 5G network by the user, the AP of the UE may trigger the timer T1 to be started. In some other embodiments, after sending a message for removing NR to the MD, the AP of the UE may trigger the timer T1 to be started. In some other implementations, the timer T1 may also be referred to as a first timer.

The timer T1 corresponds to configured timing duration 1. For example, the timing duration 1 may be less than or equal to 5s. In some other implementations, the timing duration 1 may also be referred to as a first duration.

It may be understood that in this example, the timer T1 may be configured in the AP. In this way, coupling of a corresponding function of the AP can be implemented based on configuration of the timer T1.

With reference to the descriptions of FIG. 4, in this application, the AP may be used to control interface display of the UE and accept an operation input by the user. The AP may further send a corresponding indication to the MD based on the operation input by the user.

In this example, after the timer T1 starts, and before timing of the timer T1 ends, the AP may configure a 5G enabling/disabling key displayed on the UE to be inoperable. For example, the 5G enabling/disabling key may be the key 401 shown in FIG. 4. Configuring the 5G enabling/disabling key to be inoperable may include: making no response when receiving an operation performed by the user on the 5G enabling/disabling key. In some implementations, when configuring the 5G enabling/disabling key to be inoperable, the AP can further control the key 401 displayed on an interface to be inoperable.

In this case, after receiving the operation 403 performed by the user on the interface 402, the UE does not enable the 5G network until timing of the timer T1 ends.

Therefore, before the UE initiates registration with the 5G network, time (for example, the timing duration 1 corresponding to the timer T1) is reserved to receive a TAU Accept message. This further increases a probability that the UE receives the TAU Accept message before initiating registration with the 5G network.

S805: The AP of the UE sends the message for removing the NR to the MD of the UE.

As shown in S803, the AP of the UE may receive an operation 403 input by the user. Correspondingly, the AP may generate a message for removing NR. The AP may send, to the MD of the UE for corresponding processing, the message for removing the NR. The MD may trigger, based on the message for removing the NR, a UE remove NR capability, which may be understood as disabling a 5G communication capability of the UE.

In some implementations, the MD may search for and access a nearby network after receiving the message for removing the NR. For example, the MD may search for and access a 4G network. In this case, the UE may correspondingly perform S806.

It should be noted that, in some other embodiments of this application, the UE may alternatively actively disable the 5G communication capability based on reselecting the 4G network, or receiving a network change indication A, or another reason, and correspondingly perform S806.

The network change indication A may include: a network redirection indication A1, or a network switching indication A2. For specific descriptions, refer to the descriptions of FIG. 6A and FIG. 6B. Details are not described herein again.

S806: The MD of the UE performs 4G RRC access to an eNB.

For an execution step of S806, refer to S604 shown in FIG. 6A.

For example, the MD of the UE may initiate random access to the eNB in the 4G network, to implement 4G RRC access.

In some embodiments, before performing S806, the UE may disconnect the RRC connection to the gNB.

S807: The MD of the UE sends a TAU request 83 to a 4G network device, and the MD of the UE receives a TAU accept message 84.

For example, after completing RRC access to the eNB, the MD of the UE may initiate a TAU procedure to the 4G network device.

As an example, an execution process of S807 may correspond to S304 shown in FIG. 3. The TAU request 83 may correspond to the TAU request 33 shown in FIG. 3, and the TAU request 83 may include a TAU Request message. The TAU accept message 84 may correspond to the TAU accept message 34 shown in FIG. 3, and the TAU accept message 84 may include a TAU Accept message.

It may be understood that, in some embodiments, the MD of the UE may receive the TAU accept message 84 during timing of the timer T1 in S807.

In some embodiments, the MD of the UE may send a TAU complete message to the 4G network device after receiving the TAU accept message 84.

S808: The MD of the UE sends the TAU accept message 84 to the AP, so that the AP can learn that a current TAU procedure succeeds.

S809: The AP of the UE terminates the timer T1 when the timer T1 expires or the AP receives the TAU accept message.

It may be understood that, after the timer T1 is terminated, the corresponding AP may control restoration of the 5G enabling/disabling key displayed on the UE to be operable.

In this application, an exit mechanism of the timer T1 may be configured to meet any one of the following cases:

The AP receives the TAU accept message sent by the MD, or the timing duration of the timer T1 ends.

For example, when receiving the TAU accept message sent by the MD, the AP terminates the timer T1. It may be understood that, when timing of the timer T1 does not end, the TAU procedure succeeds. Without waiting for the timer T1 to end, the UE may receive an operation of enabling the 5G network that is input by the user, and then recamp on the 5G network. Because the TAU procedure succeeds, during recamping on the 5G network, when the UE registers with the 5G network device, a TAU request may be carried in a registration request according to a protocol specification, to implement synchronization between a network side and the UE. In some other embodiments, that the AP receives the TAU accept message from the MD may alternatively be replaced with that the AP learns that the MD has sent the TAU complete message.

For example, when timing of the timer T1 ends, the timer T1 is terminated. In this case, TAU Accept message is not received in the timing duration of the timer T1. The UE cannot successfully camp on the 4G network due to a fault in the 4G network side, or the like. In this case, the AP may also terminate the timer T1, and no longer wait for the TAU Accept message. In this case, the UE does not configure 5G network enabling/disabling to be inoperable for an excessively long time. This prevents the user from mistakenly considering that 5G network enabling/disabling fails.

In this example, as shown in S808 and S809, when the AP receives the TAU accept message (for example, the TAU accept message 84), that is, when the TAU procedure succeeds, the timer T1 is terminated.

S810: The AP of the UE receives the operation of enabling the 5G network by the user, and the AP generates a message for adding the NR and sends the message to the MD.

For an execution step of S810, refer to S606 shown in FIG. 6A.

It may be understood that, because the timer T1 is terminated in S809, 5G network enabling/disabling is restored to an operable state. Correspondingly, the user may input an operation 404, to indicate the UE to enable the 5G network. Correspondingly, the AP of the UE may generate the message for adding the NR. The AP may send, to the MD of the UE for corresponding processing, the message for adding the NR.

It should be noted that in this example, the UE receives the operation of enabling the 5G network by the user and triggers the UE to recamp on the 5G network. In some other embodiments, similar to the descriptions of the solution shown in FIG. 6A and FIG. 6B, the UE may alternatively actively enable the 5G communication capability based on reselecting the 5G network, or another reason, or trigger, based on a received network change indication B, the UE to recamp on the 5G network.

Then, correspondingly, a function of the timer T1 may also be adjusted to that the UE does not send the registration request to the 5G network during timing of the timer T1. During timing of the timer T1, if the MD determines to reselect the network or receives the network change indication B sent by the 4G network device, the MD caches information corresponding to the network reselection or the network change indication B. After the timer T1 terminates, a response to the cache information is executed, such as initiating registration with the 5G network.

S811: The MD of the UE performs 5G RRC access to the gNB.

For an execution step of S811, refer to S607 shown in FIG. 6A.

For example, the UE may initiate a random access procedure to the gNB, to implement RRC access to the 5G network when random access is completed.

S812: The MD of the UE sends a registration request 85 to the gNB. The gNB sends the registration request 85 to the core network device.

S813: The UE receives a registration accept message 86 from the gNB.

For an example, for an execution process of S812 and S813, refer to S306 shown in FIG. 3. In some implementations, after receiving the registration accept message 86, the UE may further send a Registration Complete message to a 5G network device.

Because TAU registration succeeds in the 4G network, when both a condition 2 and a condition 3 are met, the registration request 85 may carry information about the TAU request. Correspondingly, the 5G network device may synchronize with the UE based on the information about the TAU request, so that the UE can be normally called over the 5G network. In some embodiments, the registration request 85 may also be referred to as a third registration request.

In some other embodiments of this application, before the timer T1 terminates, the MD of the UE receives a TAU reject message. In this case, the MD may transmit the TAU reject message to the AP. Correspondingly, the AP may terminate the timer T1. Then, the MD of the UE may search for an NR cell to camp on. After successfully camping on the NR cell, the MD can send an MRU-type registration request to the 5G network. Based on an existing protocol, the MRU-type registration request may not carry the TAU request.

It may be understood that, during all implementation of the solution provided in FIG. 8A to FIG. 8C, the UE cannot be normally called as a called party in all cases, but a procedure shown in FIG. 8A to FIG. 8C is performed in most cases. In this case, the UE can be normally called as the called party in most cases, thereby increasing a probability that the UE can normally receive a call as the called party.

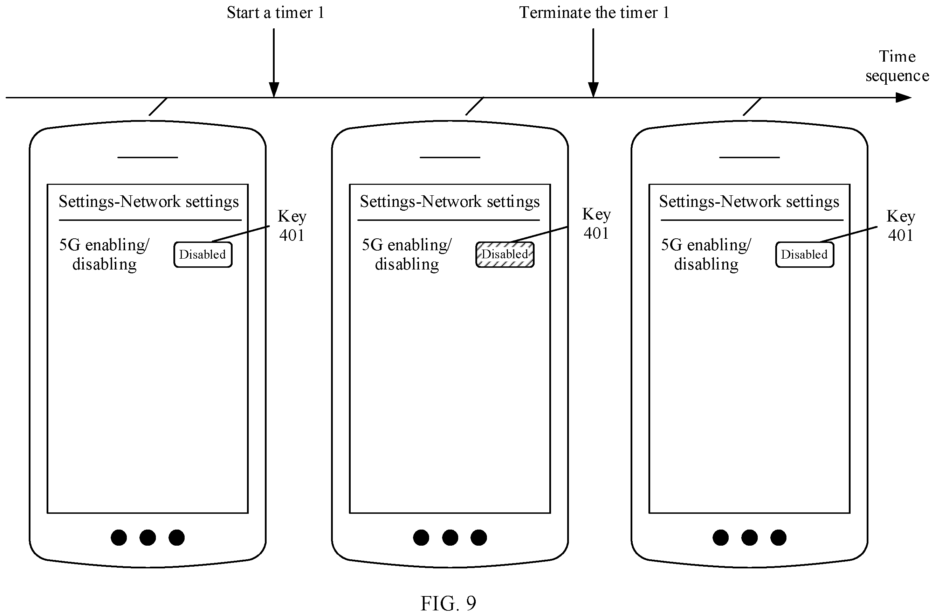

During implementation of the solution provided in FIG. 8A to FIG. 8C, an example in which the timer is configured in the AP to control whether 5G network enabling/disabling is operable is used for description. It may be understood that, in a process in which the solution provided in FIG. 8A to FIG. 8C takes effect, the user may perceive the process on the interface. For example, refer to FIG. 9. Before a timer 1 is started, 5G network enabling/disabling (for example, the key 401) of the UE is in an operable state. If 5G network enabling/disabling is configured to be inoperable according to the solution provided in FIG. 8A to FIG. 8C, the key 401 may be correspondingly displayed as inoperable gray. Then, when the timer 1 exits, 5G network enabling/disabling is restored to be operable, and the corresponding key 401 may also be restored to an operable state.

In some other embodiments of this application, the timer may be further configured in the MD of the UE.

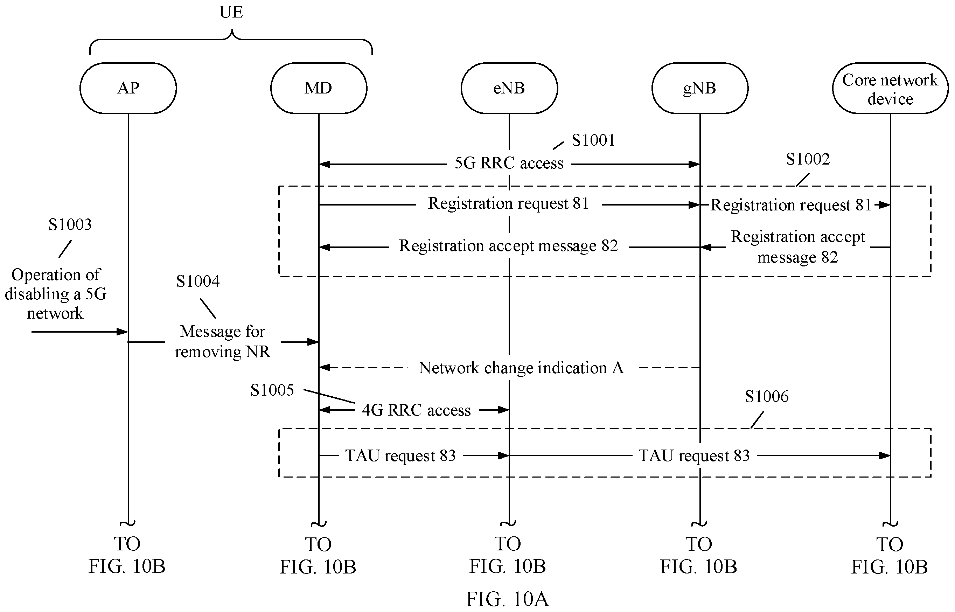

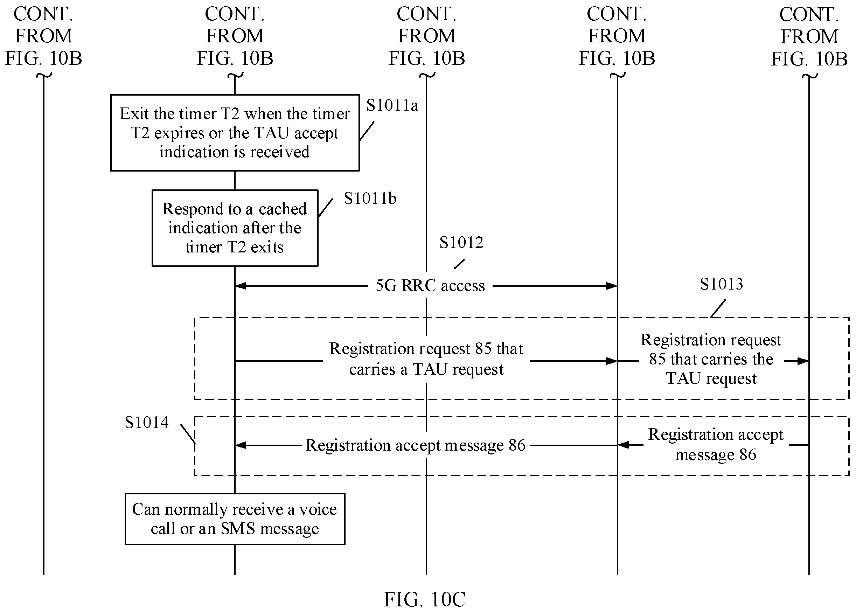

As an example, FIG. 10A to FIG. 10C are a schematic interaction flowchart of still another communication method according to an embodiment of this application. As shown in FIG. 10A to FIG. 10C, the solution may include the following steps.

S1001: An MD of UE performs 5G RRC access to a gNB.

For an execution step of S1001, refer to S801 shown in FIG. 8A.

For example, the MD of the UE may initiate a random access procedure to the gNB, to implement 5G RRC access to the gNB.

S1002: The MD of the UE registers with a 5G network via the gNB.

For an execution step of S1002, refer to S802 shown in FIG. 8A.

S1003: An AP of the UE receives an operation of disabling the 5G network by a user.

For execution of step S1003, refer to S803 shown in FIG. 8A.

S1004: The AP of the UE sends the message for removing NR to the MD of the UE.

For execution of step S1004, refer to S805 shown in FIG. 8A.

S1005: The MD of the UE performs 4G RRC access to an eNB.

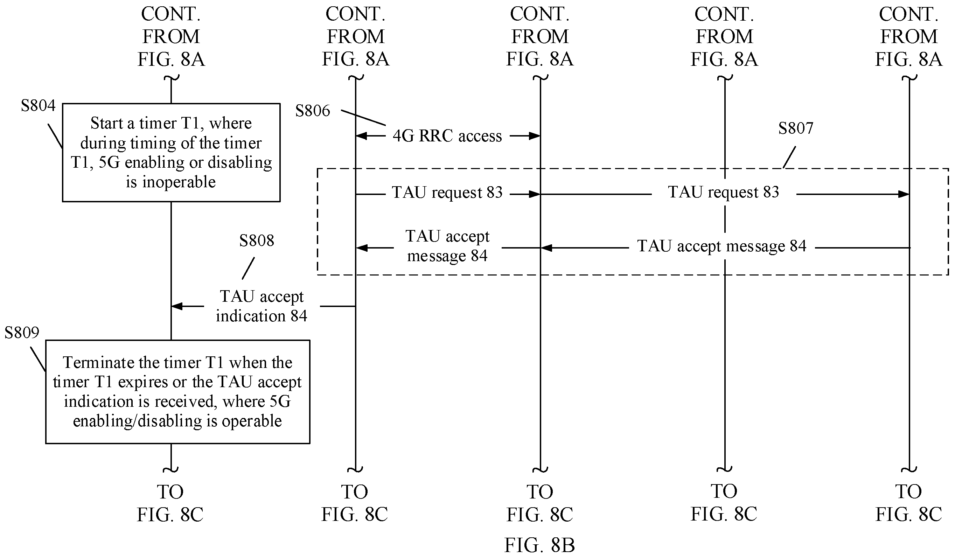

For execution of step S1005, refer to S806 shown in FIG. 8B.

S1006: The MD of the UE sends a TAU request 83 to a 4G network device.

For execution of step S1006, refer to the corresponding descriptions of S807 shown in FIG. 8B.

S1007: The MD of the UE starts a timer T2.

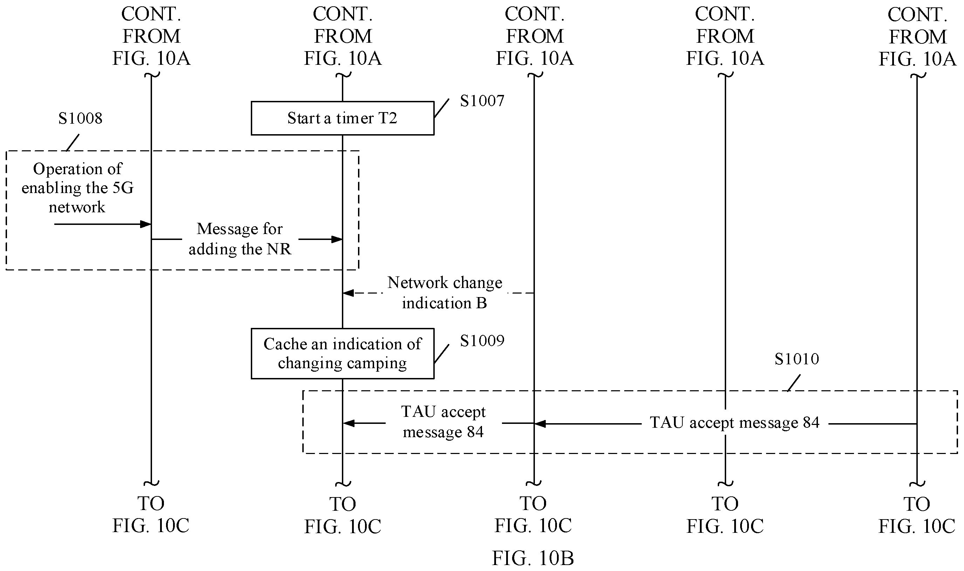

As described in FIG. 10B, an operation of starting the timer T2 by the MD of the UE may be triggered when the MD initiates a TAU procedure (for example, performs S1006 to send the TAU request 83) to a 4G network. In some embodiments, the MD may change based on a value of a TAU status field. When a changed TAU status is TAU registering, the MD triggers S1007 to be performed.

In this example, a timer T2 may be configured in the MD of the UE. During timing of the timer T2, the UE temporarily does not perform a registration procedure with the 5G network.

In some cases, the MD may alternatively receive an indication of changing camping during timer T2 timing. Correspondingly, the MD may perform processing based on S1008 and S1009.

S1008: The AP of the UE receives an operation of enabling the 5G network by the user, and the AP generates a message for adding the NR and sends the message to the MD.

For example, during timing of the timer T2, the AP may receive the operation of enabling the 5G network by the user. For example, the operation may be the operation 404 shown in FIG. 4.

Correspondingly, the AP may generate the message for adding the NR and sends the message to the MD, to indicate the MD to search for the 5G network to camp on.

S1009: The MD of the UE caches the indication of changing camping.

In this example, the indication of changing camping may include the message for adding the NR that is sent by the AP.

It may be understood that, because the timer T2 is timing, the MD may cache the received message for adding the NR at a specified location, so that after the timer T2 exits, the MD may respond to the cached message for adding the NR.

In S1008 and S1009, an example in which the indication of changing camping includes the message for adding the NR that is sent by the AP is used. That is, in this example, changing to camp on the 5G network is triggered based on the operation of enabling the 5G network that is input by the user.

In some other embodiments, the indication of changing camping may alternatively include: information generated by the MD during network reselection, or a network change indication B received by the MD. For specific implementation of the network change indication B, refer to the foregoing descriptions. Details are not described again.

In this case, when the MD receives any one of the indications of changing camping during timing of the timer T2, the indications of changing camping may be cached at a specified location, so that after the timer T2 exits, the MD may respond to the cached indications of changing camping.

S1010: The MD of the UE receives a TAU accept message 84.

In this example, the UE may receive the TAU accept message 84 during timing of the timer T2. Therefore, based on a waiting period of the timer T2, the UE may receive the TAU accept message 84 before initiating registration with the 5G network.

S1011a: Terminate the timer T2 when the timer T2 expires or the TAU accept message is received.

An exit mechanism of the timer T2 is similar to an exit mechanism of the timer T1. For specific implementation, refer to each other.

S1011b: Respond to a cached indication after the timer T2 exits. For example, after the timer T2 exits, the UE may respond to cached information generated by the MD during network reselection, or a cached network change indication B received by the MD, or the cached message for adding the NR. Correspondingly, the UE may perform S1012.

S1012: An MD of UE performs 5G RRC access to a gNB.

S1013: The MD of the UE sends a registration request 85 to the gNB. The gNB sends the registration request 85 to the core network device.

S1014: The UE receives a registration accept message 86 from the gNB.

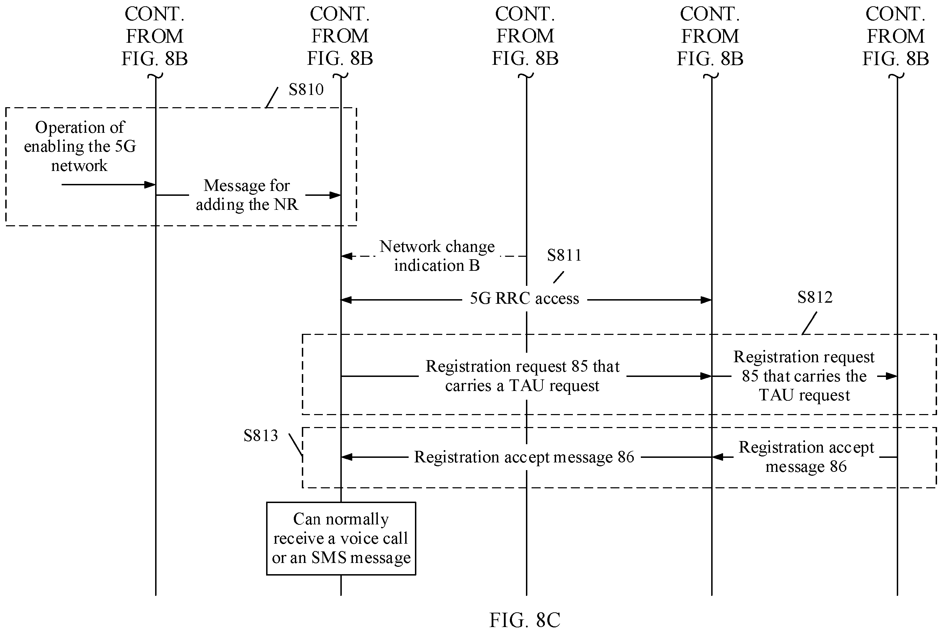

In this example, for an execution process of S1012 to S1014, separately refer to S811 to S813 in FIG. 8C. For specific implementation, refer to each other. Details are not described again. In some implementations, the registration request 85 in S1013 may also be referred to as a fourth registration request. In some implementations, the fourth registration request may be the same as a third registration request.

It should be noted that, similar to the example in FIG. 8A to FIG. 8C, in some other embodiments of this application, if the modem of the UE receives a TAU reject message before the timer T2 expires, the UE may terminate the timer T2, and after T2 is terminate, the modem searches for an NR cell to camp on, and initiates an RRC access procedure and an MRU procedure, and a REGISTRATION REQUEST message does not carry a TAU request message. In this case, after the UE successfully registers with the 5G network, the UE fails to be called as a called party. Alternatively, in some other embodiments of this application, if the modem of the UE receives neither a TAU reject message nor the TAU accept message until the timer T2 expires, after the timer T2 expires, the modem searches for an NR cell to camp on, and initiates an RRC access procedure and an MRU procedure, and a REGISTRATION REQUEST message does not carry a TAU request message. In this case, after the UE successfully registers with the 5G network, the UE fails to be called as a called party. As described above, the UE cannot normally receive a call as a called party in all cases, but a procedure shown in FIG. 10A to FIG. 10C is performed in most cases. In this case, the UE can be normally called as the called party in most cases, thereby increasing a probability that the UE can normally receive a call as the called party.

In this case, during implementation of the solution shown in FIG. 10A to FIG. 10C, the timer T2 is configured in the MD, so that timing duration of the timer T2 may be obtained before the UE initiates registration with the 5G network to recamp on, similar to the solution shown in FIG. 9. This increases a probability that the UE completes the TAU procedure in the 4G network before initiating registration with the 5G network to recamp on. This further increases a probability that a registration request sent by the UE to the 5G network device carries a TAU request, so that a network side can complete synchronization with the UE, and the UE can be normally called. In addition, in the solution shown in FIG. 10A to FIG. 10C, because the timer T2 is configured in the MD, interface information provided by the UE to the user is not affected. For example, the interface does not show to the user that 5G enabling/disabling is inoperable. In this case, the user may not perceive an implementation process of the solution.

It should be noted that, in the descriptions of implementation of the foregoing solutions, an example in which the UE changes from the 5G network to the 4G network to camp on and does not receive the TAU accept message over the 4G network before re-registering with the 5G network is used, to describe implementation of the foregoing solutions provided in embodiments of this application.

In some other embodiments of this application, the solutions may be further extended and applied to a switching camping scenario between other standards (for example, not limited to 4G and 5G, for example, 5G and 6G, or 6G and 7G).

For example, the UE camps on a first network. The UE changes to camp on a second network by disabling a communication capability of the first network or under an indication of a first network device. Correspondingly, the UE may camp on a cell of the second network. For example, the UE may initiate an RRC connection to the cell of the second network, and further camp on the cell of the second network. Then, the UE may further initiate a mobility location update procedure to the cell of the second network. For example, the UE may send a mobility location update request to the cell of the second network.

Corresponding to the foregoing embodiment, when the first network is a 5G network and the second network is a 4G network, a mobility location update request sent by the UE to the cell of the second network may be a TAU request, and a corresponding mobility location update procedure in this 4G scenario may be referred to as a TAU procedure. In some other embodiments, when the second network is a 5G network, a mobility location update request sent by the UE to the cell of the second network may be referred to as an MRU request (or an MRU-type registration request), and a corresponding mobility location update procedure in this 5G scenario may be referred to as an MRU procedure.

With reference to the descriptions of FIG. 5, after initiating the mobility location update procedure to the cell of the second network, and when the mobility location update procedure is not completed, the UE may search for a cell of the first network and access the cell of the first network by enabling the communication capability of the first network or after receiving a message for recamping on the first network. Then, the UE may further send a registration request to a core network device of the first network via the cell of the first network.

Based on implementation of the existing solutions, because the mobility location update procedure in the second network is not completed, the registration request sent to the core network device of the first network may not carry the mobility location update request. For example, the first network is a 5G network and the second network is a 4G network. The registration request may be of an MRU type. A registration request that does not carry the mobility location update request may correspond to that the registration request does not carry a TAU request. For example, the first network is a 6G network and the second network is a 5G network. A registration request that does not carry the mobility location update request may correspond to that the registration request does not carry an MRU request. Therefore, the UE cannot normally receive a voice call or an SMS message in the first network.

Based on implementation of the solutions provided in embodiments of this application, the UE may send an initial registration-type registration request to the first network based on an ongoing mobility location update procedure. Alternatively, the UE may send, to the first network based on an ongoing mobility location update procedure when another condition (for example, the condition 2, or the condition 2 and the condition 3) is met, the registration request that carries the mobility location update request. Alternatively, the AP of the UE may start the first timer after receiving a message for disabling a first network capability, or receiving a message for changing to camp on the second network. Alternatively, the MD of the UE may start the second timer after sending the mobility location update request to the second network. Therefore, this avoids a problem that the UE cannot normally receive a voice call or an SMS message after recamping on the first network, and increases a probability that the UE normally receives a voice call or an SMS message after recamping on the first network.

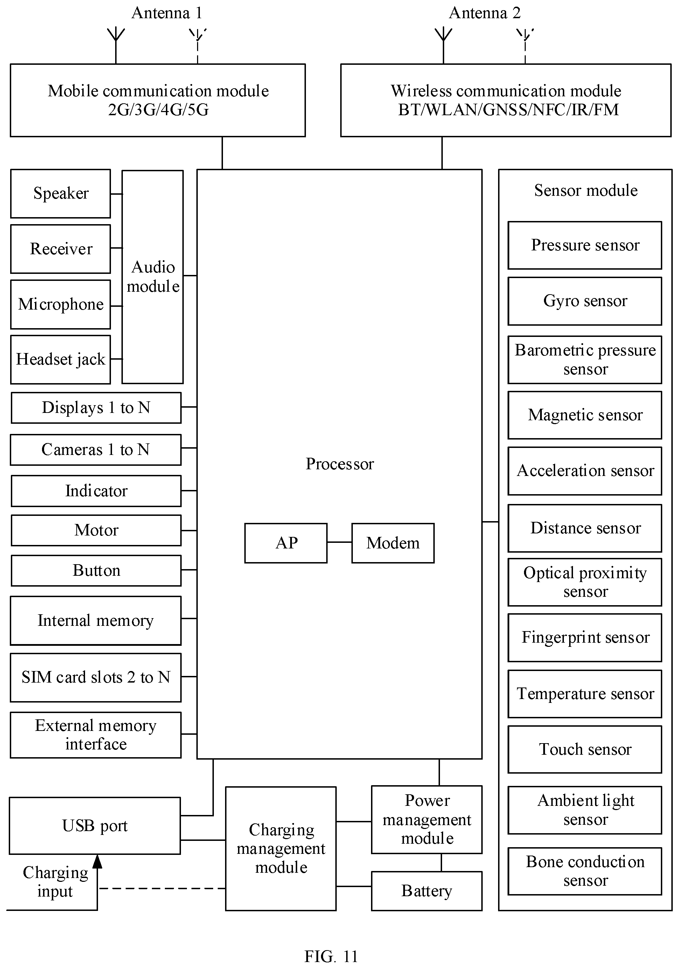

The foregoing descriptions of the solutions provided in embodiments of this application are all described from an angle of the UE, or the AP or MD of the UE. FIG. 11 is an example of hardware composition of a terminal device (namely, UE) according to an embodiment of this application.

As shown in FIG. 11, the terminal device may include a processor, an external memory interface, an internal memory, a universal serial bus (Universal Serial Bus, USB) port, a charging management module, a power management module, a battery, an antenna 1, an antenna 2, a mobile communication module, a wireless communication module, a sensor module, a button, a motor, an indicator, a camera, a display, a SIM card slot, and the like. The audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It can be understood that, a structure illustrated in this embodiment of this application does not constitute a specific limitation on the terminal device. In some other embodiments, the terminal device may include more or fewer components than those shown in the figure, or some components may be combined, or some components may be split, or there may be a different component layout. The components in the figure may be implemented by hardware, software, or a combination of software and hardware.

The processor may include one or more processing units. For example, the processor may include an application processor (Application Processor, AP), a modem (Modem, also referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural-network processing unit (Neural-network Processing Unit, NPU). Different processing units may be separate devices, or may be integrated into one or more processors. The processor is a nerve center and a command center of the terminal device. The controller can generate an operation control signal based on instruction operation code and a timing signal, to complete control of fetching and executing instructions.

A wireless communication function of the terminal device may be implemented by using the antenna 1, the antenna 2, the mobile communication module, the wireless communication module, the modem, and the like. In some embodiments, in the terminal device, the antenna 1 is coupled to the mobile communication module, and the antenna 2 is coupled to the wireless communication module, so that the terminal device may communicate with a network side device and another terminal device by using a wireless communication technology.

In addition, an operating system runs on the components, for example, an iOS^{®} operating system developed by Apple^{®}, an Android^{®} open source operating system developed by Google^{®}, or a Windows^{®} operating system developed by Microsoft^{®}.

An operation system of the terminal device may use a layered architecture, an event-driven architecture, a microkernel architecture, a micro-service architecture, or a cloud architecture. In embodiments of this application, an Android^{®} system of a layered architecture is used as an example to describe software and hardware structures of the terminal device. It should be noted that although the Android^{®} system is used as an example for descriptions of this embodiment of this application, a basic principle thereof is also applicable to a terminal device based on an operating system such as iOS^{®} or Windows^{®}.

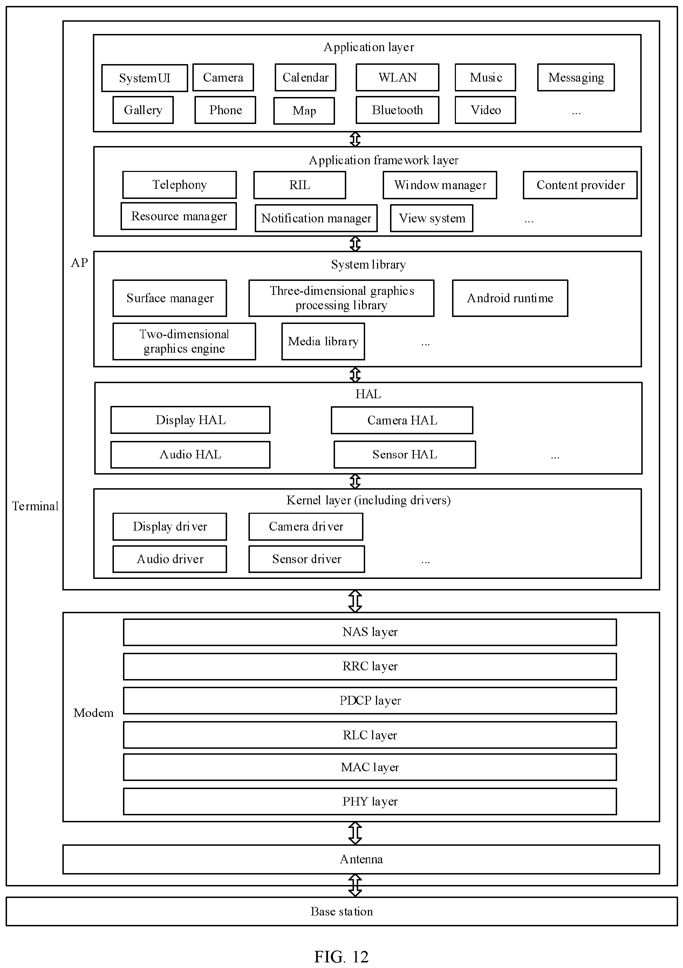

For example, FIG. 12 is a block diagram of a software structure of a terminal device according to an embodiment of this application. The software structure adopts a hierarchical structure, which divides the software into several layers. Each layer has a clear role and division of labor. The layers communicate with each other through software interfaces. For example, an Android^{®} system runs on an AP. In some embodiments, the Android^{®} system is divided into five layers: an application layer, an application framework layer (Framework), an Android runtime (Android runtime) and system library, a hardware abstract layer (HAL), and a system kernel layer (Kernel).

The application layer may include a series of application packages. The application packages may include apps such as camera, gallery, calendar, phone, map, WLAN, Bluetooth, music, videos, and messaging. The application layer may further include systemUI (systemUI), and systemUI is used for displaying an interface of the terminal device, such as displaying a signal icon corresponding to a SIM card, and displaying a call interface. The application framework layer provides an application of the application layer with an application programming interface (Application Programming Interface, API) and a programming framework. The application framework layer includes some predefined functions. For example, the application framework layer may include a window manager, a content provider, a view system, a phone manager, a resource manager, a notification manager, and the like. The phone manager is configured to provide a call function of the terminal device, for example, management of a call status (answering and hanging up). The phone manager is represented by a telephony in FIG. 12. The application framework layer may further include a RIL (Radio Interface Layer, radio interface layer). A modem (modem) may exchange information with the telephony by using the RIL.

The modem may include a NAS (Non-Access Stratum, non-access stratum) layer, an RRC (radio resource control, radio resource control) layer, a packet data convergence protocol (Packet Data Convergence Protocol, PDCP) layer, a radio link control (Radio Link Control, RLC) layer, a medium access control (Medium Access Control Layer, MAC) layer, and a physical (Physical, PHY) layer. The layers may be software modules. The modem may interact with a base station by using an antenna.

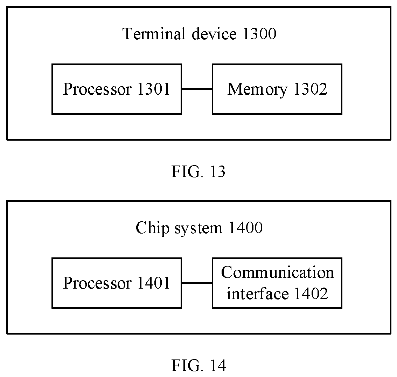

In addition, FIG. 13 is a composition diagram of a terminal device 1300 according to some embodiments of this application. The terminal device 1300 includes one or more processors 1301 and a memory 1302. The memory 1302 is configured to store computer program code. The computer program code includes computer instructions. When the one or more processors 1301 execute the computer instructions, the terminal device is enabled to perform the technical solution provided in any embodiment in the foregoing descriptions.

FIG. 14 is a diagram of composition of a chip system 1400 according to some embodiments of this application. The chip system 1400 is applied to a terminal device, and the chip system 1400 includes at least one processor 1401 and a communication interface 1402. The communication interface 1402 is configured to receive instructions and transmit the instructions to the at least one processor 1401. The at least one processor 1401 runs the instructions, to enable the terminal device to perform the foregoing communication methods. The chip system may be a modem or a system on chip (System on Chip, Soc) including the modem. The foregoing methods may be implemented by one modem.

In some other embodiments of this application, the chip system includes a processing circuit, a receiving pin, and a sending pin. The receiving pin, the sending pin, and the processing circuit communicate with each other through an internal connection path, and the processing circuit performs the foregoing communication method provided in any embodiment, to control the receiving pin to receive a signal and control the sending pin to send a signal.

In addition, an embodiment of this application provides a terminal device, and the terminal device has a function of implementing terminal device behavior in any one of the foregoing method embodiments. The function may be implemented by hardware, or may be implemented by hardware executing corresponding software. The hardware or the software includes one or more modules corresponding to sub-functions in the function. Specifically, the terminal device may be user equipment, such as a mobile phone.

An embodiment of this application further provides a communication system, and the system includes the network device and the terminal device described in any one of the foregoing embodiments.

An embodiment of this application further provides a computer-readable storage medium. The computer-readable medium stores a computer program. When the computer program is executed by a computer, the method processes related to a terminal device in any one of the foregoing method embodiments are implemented. Specifically, the computer may be the foregoing terminal device.

An embodiment of this application further provides a computer program or a computer program product including a computer program. When the computer program is executed on a computer, the computer implements a method procedure related to a terminal device in any one of the foregoing method embodiments. Specifically, the computer may be the foregoing terminal device.

An embodiment of this application further provides a computer program or a computer program product including a computer program. When the computer program is executed on a computer, the computer implements the method processes related to a network device in any one of the foregoing method embodiments. Specifically, the computer may be the network device.

An embodiment of this application further provides an apparatus, used in a terminal device. The apparatus is coupled to a memory and configured to read and execute instructions stored in a memory, to enable the terminal device to perform a method procedure related to the terminal device in any one of the foregoing method embodiments. The memory may be integrated into a processor, or may be independent of the processor. The apparatus may be a chip on the terminal device. In some implementations, the chip may be a system on chip (System on a Chip, SoC).

It should be understood that the processor mentioned in the embodiment in the present invention may be a central processing unit (Central Processing Unit, CPU), or may be another general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, any conventional processor, or the like.

It should be further understood that the memory mentioned in the embodiment in the present invention may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable read-only memory (Erasable PROM, EPROM), an electrically erasable programmable read-only memory (Electrically EPROM, EEPROM), or a flash memory. The volatile memory may be a Random Access Memory (Random Access Memory, RAM) that serves as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that the memory described in this specification is intended to include, but is not limited to, these memories and any memory of another appropriate type.

It should be further understood that the first, the second, and the various numeric numbers in this specification are merely for easy description, and are not intended to limit the scope of this application.

In this application, "and/or" describes an association relationship between associated objects, and indicates that there may be three relationships. For example, A and/or B may indicate a case in which A exists separately, A and B exist simultaneously, and B exists separately, where A and B may be singular numbers or complex numbers. The character "/" generally represents an "or" relationship between the associated objects.

In this application, at least one means one or more, and a plurality of means two or more. "At least one of the following items (pieces)" or a similar expression thereof means any combination of these items, including any combination of singular items (pieces) or plural items (pieces). For example, "at least one item (piece) of a, b, or c" or "at least one item (piece) of a, b, and c" may represent the following: a, b, c, a-b (namely, a and b), a-c, b-c, or a-b-c, where a, b, and c may be singular or plural.

It should be understood that sequence numbers of the foregoing processes do not mean execution sequences in various embodiments of this application. Some or all steps may be performed in parallel or in sequence. All steps shown in the figure do not need to be performed by the UE. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application can be integrated into one processing unit, or each of the units can exist alone physically, or two or more units can be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or the part of the technical solutions may be implemented in a form of a software product. The computer software product is stored in a storage medium and includes several instructions for instructing a computer device (which may be a personal computer, a server, a network device, or a terminal device) to perform all or a part of the steps of the methods described in the embodiment of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Mutual reference may be made to related parts in the method embodiments of the present invention. The apparatuses provided in the apparatus embodiments are configured to perform the methods provided in the corresponding method embodiments. Therefore, for the apparatus embodiments, refer to the related parts in the related method embodiments for understanding.

An apparatus structural diagram provided in each apparatus embodiment of the present invention shows only a simplified design of a corresponding apparatus. In actual application, the apparatus may include any quantities of transmitters, receivers, processors, memories, and the like, to implement functions or operations performed by the apparatuses in the apparatus embodiments of the present invention, and all apparatuses that can implement this application fall within the protections scope of this application.

A name such as a message/frame/indication information, a module, or a unit provided in each embodiment of the present invention is merely an example, and another name may be used, provided that functions of the message/frame/indication information, the module, or the unit are the same.

The terms used in embodiments of the present invention are merely for the purpose of illustrating specific embodiments, and are not intended to limit the present invention. Terms "a", "the foregoing", and "the" of singular forms used in embodiments and the appended claims of the present invention are also intended to include plural forms, unless otherwise specified in the context clearly. The term "and/or" used in this specification means and includes any or all possible combinations of one or more associated listed items. The character "/" in this specification usually represents an "or" relationship between associated objects.

It should be understood that, although the terms first, second, and third may be used in the embodiment of the present invention to describe various messages, requests, and terminals, these messages, requests, and terminals are not limited to these terms. These terms are only used to differentiate the messages, the requests, and the terminals. For example, without departing from the embodiment scope of the present invention, the first terminal may also be referred to as a second terminal. Similarly, the second terminal may also be referred to as a first terminal.

Depending on the context, for example, words "if" or "provided that" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

A person of ordinary skill in the art should understand that all or part of the steps of the method specified in any foregoing embodiment may be implemented by a program instructing related hardware. The program may be stored in a readable storage medium of a device such as a flash, or an EEPROM. When the program runs, the program executes all or part of the steps described above.

The foregoing specific implementation further describes the objectives, technical solutions, and beneficial effects of the present invention in detail. It should be understood that different embodiments may be combined. The foregoing descriptions are merely specific implementation of the present invention, and are not intended to limit the protection scope of the present invention. Any combination, modification, equivalent replacement, or improvement that is made within the spirit and principles of the present invention shall fall within the protection scope of the present invention.

## Claims

1. A communication method, wherein the method comprises:
camping, by user equipment UE, on an NR network;
receiving, by the UE, a first operation performed by a user on an interface of the UE, wherein the first operation is used to disable a 5G communication capability of the UE;
after receiving the first operation, camping, by the UE, on a first LTE cell, and initiating a tracking area update TAU procedure to the first LTE cell, wherein the TAU procedure comprises that the UE sends a TAU request to the first LTE cell;
after receiving the first operation, receiving, by the UE, a second operation performed by the user on the interface of the UE, wherein the second operation is used to enable the 5G communication capability of the UE; and
after the UE receives the second operation, when the UE meets a preset condition, camping, by the UE, on a first NR cell, and sending a first registration request to the first NR cell, wherein the first registration request carries indication information indicating that a registration type is initial registration initial registration; and that the UE meets the preset condition comprises: the TAU procedure is ongoing before the UE sends the first registration request to the first NR cell.

2. The method according to claim 1, wherein that the TAU procedure is ongoing before the UE sends the first registration request to the first NR cell comprises:
when the UE prepares to send the first registration request to the first NR cell, or when the UE receives the second operation, the TAU procedure is ongoing.

3. The method according to claim 1, wherein that the TAU procedure is ongoing before the UE sends the first registration request to the first NR cell comprises:
when a modem modem of the UE receives a second instruction, the TAU procedure is ongoing, wherein the second instruction is a message sent by an application processor AP of the UE to the modem after the UE receives the second operation.

4. The method according to any one of claims 1 to 3, wherein that the TAU procedure is ongoing comprises: the UE receives neither a TAU reject reject message sent from the first LTE cell nor a TAU accept accept message sent from the first LTE cell.

5. The method according to any one of claims 1 to 4, wherein the 5G communication capability of the UE comprises a capability of the UE to communicate with a 5G network of standalone SA networking.

6. The method according to any one of claims 1 to 5, wherein the receiving, by the UE, a second operation performed by the user on the interface of the UE comprises:
after sending the TAU request to the first LTE cell, receiving, by the UE, the second operation performed by the user on the interface of the UE.

7. The method according to any one of claims 3 to 6, wherein that the modem of the UE receives the second instruction comprises:
after the modem of the UE sends the TAU request to the first LTE cell, the modem receives the second instruction.

8. The method according to any one of claims 1 to 7, wherein the camping, by the UE, on the first LTE cell comprises:
after the modem of the UE receives a first instruction, camping, by the UE, on the first LTE cell, wherein the first instruction is a message sent by the AP of the UE to the modem after the UE receives the first operation.

9. A communication method, wherein the method comprises:
camping, by user equipment UE, on an NR network;
when the UE reselects an LTE network, or the UE is redirected from the NR network to the LTE network, or the UE switches from the NR network to the LTE network, or the UE disables a 5G communication capability of the UE, camping, by the UE, on a first LTE cell, and initiating a TAU procedure to the first LTE cell, wherein the TAU procedure comprises that the UE sends a TAU request to the first LTE cell; and
when the UE reselects the NR network, or the UE is redirected from the LTE network to the NR network, or the UE switches from the LTE to the NR network, or the UE enables the 5G communication capability of the UE, and the UE meets a preset condition, camping, by the UE, on a first NR cell, and sending a first registration request to the first NR cell, wherein the first registration request carries indication information indicating that a registration type is initial registration initial registration; and that the UE meets the preset condition comprises: the TAU procedure is ongoing before the UE sends the first registration request to the first NR cell.

10. The method according to claim 9, wherein that the TAU procedure is ongoing before the UE sends the first registration request to the first NR cell comprises:
when the UE prepares to send the first registration request to the first NR cell, or when the UE enables the 5G communication capability of the UE, the TAU procedure is ongoing.

11. The method according to claim 9 or 10, wherein
the case in which the UE enables the 5G communication capability of the UE comprises: the UE receives a second operation performed by a user on an interface of the UE, wherein the second operation is used to enable the 5G communication capability of the UE; and
the case in which the UE disables the 5G communication capability of the UE comprises: the UE receives a first operation performed by the user on the interface of the UE, wherein the first operation is used to disable the 5G communication capability of the UE.

12. The method according to claim 11, wherein
the case in which the UE enables the 5G communication capability of the UE further comprises: a modem of the UE receives a second instruction, wherein the second instruction is a message sent by an AP of the UE to the modem after the UE receives the second operation; and
the case in which the UE disables the 5G communication capability of the UE further comprises: the modem of the UE receives a first instruction, wherein the first instruction is a message sent by the AP of the UE to the modem after the UE receives the first operation.

13. The method according to any one of claims 9 to 12, wherein
that the TAU procedure is ongoing comprises: the UE receives neither a TAU reject reject message sent from the first LTE cell nor a TAU accept accept message sent from the first LTE cell.

14. The method according to any one of claims 9 to 13, wherein the 5G communication capability of the UE comprises a capability of the UE to communicate with a 5G network of standalone SA networking.

15. A communication method, wherein the method comprises:
camping, by user equipment UE, on a first network;
receiving, by the UE, a first operation performed by a user on an interface of the UE, wherein the first operation is used to disable a communication capability of the UE in the first network;
after receiving the first operation, camping, by the UE, on a cell of a second network, and initiating a first mobility location update procedure to the cell of the second network, wherein the first mobility location update procedure comprises that the UE sends a first mobility location update request to the cell of the second network, and a standard of the second network is different from a standard of the first network;
after receiving the first operation, receiving, by the UE, a second operation performed by the user on the interface of the UE, wherein the second operation is used to enable the communication capability of the UE in the first network; and
after the UE receives the second operation, when the UE meets a preset condition, camping, by the UE, on a cell of the first network, and sending a first registration request to the cell of the first network, wherein the first registration request carries indication information indicating that a registration type is initial registration initial registration; and that the UE meets the preset condition comprises: the first mobility location update procedure is ongoing before the UE sends the first registration request to the cell of the first network.

16. A communication method, wherein the method comprises:
camping, by user equipment UE, on a first network;
when the UE reselects a second network, or the UE is redirected from the first network to the second network, or the UE switches from the first network to the second network, or the UE disables a communication capability of the UE in the first network, camping, by the UE, on a cell of the second network, and initiating a mobility location update procedure to the cell of the second network, wherein the mobility location update procedure comprises that the UE sends a mobility location update request to the cell of the second network; and
when the UE reselects the first network, or the UE is redirected from the second network to the first network, or the UE switches from the second network to the first network, or the UE enables a communication capability in the first network, and the UE meets a preset condition, camping, by the UE, on a cell of the first network, and sending a first registration request to the cell of the first network, wherein the first registration request carries indication information indicating that a registration type is initial registration initial registration; and that the UE meets the preset condition comprises: the mobility location update procedure is ongoing before the UE sends the first registration request to the cell of the first network.

17. A communication method, wherein the method comprises:
camping, by user equipment UE, on an NR network;
receiving, by the UE, a first operation performed by a user on an interface of the UE, wherein the first operation is used to disable a 5G communication capability of the UE;
after receiving the first operation, camping, by the UE, on a first LTE cell, and initiating a tracking area update TAU procedure to the first LTE cell, wherein the TAU procedure comprises that the UE sends a TAU request to the first LTE cell;
after receiving the first operation, receiving, by the UE, a second operation performed by the user on the interface of the UE, wherein the second operation is used to enable the 5G communication capability of the UE; and
after the UE receives the second operation, when the UE meets a preset condition, camping, by the UE, on the first NR cell, and sending a second registration request to the first NR cell, wherein the second registration request carries the TAU request; and that the UE meets the preset condition comprises: the TAU procedure is ongoing before the UE sends the second registration request to the first NR cell.

18. The method according to claim 17, wherein that the UE meets the preset condition further comprises:
before the UE sends the second registration request to the first NR cell, the UE is in a 5GMM-IDLE state, or
before the UE sends the second registration request to the first NR cell, the UE is in a 5GMM-IDLE state, and the UE has received, from the NR network, an indication indicating that the NR network supports an N26 interface.

19. A communication method, wherein the method comprises:
camping, by user equipment UE, on an NR network;
when the UE reselects an LTE network, or the UE is redirected from the NR network to the LTE network, or the UE switches from the NR network to the LTE network, or the UE disables a 5G communication capability of the UE, camping, by the UE, on a first LTE cell, and initiating a TAU procedure to the first LTE cell, wherein the TAU procedure comprises that the UE sends a TAU request to the first LTE cell; and
when the UE reselects the NR network, or the UE is redirected from the LTE network to the NR network, or the UE network enables the 5G communication capability of the UE, and the UE meets a preset condition, camping, by the UE, on a first NR cell, and sending a second registration request to the first NR cell, wherein the second registration request carries the TAU request; and that the UE meets the preset condition comprises: the TAU procedure is ongoing before the UE sends the second registration request to the first NR cell.

20. A communication method, wherein the method comprises:
camping, by user equipment UE, on an NR network;
receiving, by the UE, a first operation performed by a user on an interface of the UE, wherein the first operation is used to disable a 5G communication capability of the UE;
after receiving the first operation, camping, by the UE, on a first LTE cell, and initiating a tracking area update TAU procedure to the first LTE cell, wherein the TAU procedure comprises that the UE sends a TAU request to the first LTE cell;
after receiving the first operation, receiving, by the UE, a second operation performed by the user on the interface of the UE, wherein the second operation is used to enable the 5G communication capability of the UE; and the second operation is received when first duration elapses after the UE receives the first operation, or the second operation is received after the TAU procedure succeeds; and
after the UE receives the second operation, camping, by the UE, on a first NR cell, and sending a third registration request to the first NR cell, wherein the third registration request carries the TAU request.

21. The method according to claim 20, wherein after the receiving, by the UE, a first operation, the method further comprises:
starting, by an AP of the UE, a first timer, wherein timing duration of the first timer is the first duration; and
during timing of the first timer, enabling, by the UE, the 5G communication capability of the UE to be configured to be inoperable.

22. The method according to claim 21, wherein the method further comprises:
exiting the first timer when timing of the first duration ends or a TAU Accept message corresponding to the TAU request is received; and
after exiting the first timer, enabling, by the UE, the 5G communication capability of the UE to be configured to be operable.

23. The method according to claim 21 or 22, wherein the receiving, by the UE, the second operation comprises:
after exiting the first timer, receiving, by the UE, the second operation.

24. A communication method, wherein the method comprises:
camping, by user equipment UE, on an NR network;
receiving, by the UE, a first operation performed by a user on an interface of the UE, wherein the first operation is used to disable a 5G communication capability of the UE;
after receiving the first operation, camping, by the UE, on a first LTE cell, and initiating a tracking area update TAU procedure to the first LTE cell, wherein the TAU procedure comprises that the UE sends a TAU request to the first LTE cell;
after receiving the first operation, receiving, by the UE, a second operation performed by the user on the interface of the UE, wherein the second operation is used to enable the 5G communication capability of the UE; and the second operation is received in second duration after the UE receives the first operation, or the second operation is received before the TAU procedure succeeds and
when the second duration elapses after the UE receives the first operation or after the TAU procedure succeeds, camping, by the UE, on a first NR cell, and sending a fourth registration request to the first NR cell, wherein the fourth registration request carries the TAU request.

25. The method according to claim 24, wherein after sending the TAU request, the method further comprises:
starting, by a modem of the UE, a second timer, wherein timing duration of the second timer is the second duration; and
during timing of the second timer, caching, by the modem of the UE, information corresponding to the received second operation.

26. The method according to claim 25, wherein the information corresponding to the second operation comprises a second instruction, wherein the second instruction is a message sent by an application processor AP of the UE to the modem after the UE receives the second operation; and
after receiving, by the UE, the second operation, the method further comprises:
receiving, by the modem of the UE, the second instruction.

27. The method according to claim 25 or 26, wherein before the camping, by the UE, on the first NR cell, the method further comprises:
exiting, by the UE, the second timer when timing of the second duration ends or a TAU Accept message corresponding to the TAU request is received.

28. The method according to claim 27, wherein the camping, by the UE, on a first NR cell, and sending a fourth registration request to the first NR cell, when the second duration elapses after the UE receives the first operation or after the TAU procedure succeeds comprises:
after exiting the second timer, camping, by the UE, on the first NR cell, and sending the fourth registration request to the first NR cell.

29. A terminal device, wherein the terminal device comprises: a memory and a processor, configured to store instructions, wherein the processor is configured to invoke and execute the instructions in the memory, to enable the terminal device to perform the method according to any one of claims 1 to 8, or the method according to any one of claims 9 to 14, or the method according to claim 15, or the method according to claim 16, or the method according to any one of claims 17 and 18, or the method according to claim 19, or the method according to any one of claims 20 to 23, or the method according to any one of claims 24 to 28.

30. A chip system, wherein the chip system comprises a processor, configured to support a terminal device to implement the method according to any one of claims 1 to 8, or the method according to any one of claims 9 to 14, or the method according to claim 15, or the method according to claim 16, or the method according to any one of claims 17 and 18, or the method according to claim 19, or the method according to any one of claims 20 to 23, or the method according to any one of claims 24 to 28.
